(19)

Europäisches
Patentamt
European
Patent Office
Office européen
des brevets

(11) **EP 4 679 333 A1**

(12) **EUROPEAN PATENT APPLICATION**
published in accordance with Art. 153(4) EPC

(43) Date of publication:
**14.01.2026 Bulletin 2026/03**

(21) Application number: **23926197.7**

(22) Date of filing: **03.03.2023**

(51) International Patent Classification (IPC):
***G06N 10/00*** (2022.01)

(52) Cooperative Patent Classification (CPC):
**G06N 10/00**

(86) International application number:
**PCT/JP2023/008192**

(87) International publication number:
**WO 2024/184983 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED
Kawasaki-shi, Kanagawa 211-8588 (JP)**

(72) Inventor: **OHFUCHI, Mari
Kawasaki-shi, Kanagawa 211-8588 (JP)**

(74) Representative: **Haseltine Lake Kempner LLP
Cheapside House
138 Cheapside
London EC2V 6BJ (GB)**

(54) **INFORMATION PROCESSING PROGRAM, INFORMATION PROCESSING METHOD, AND INFORMATION PROCESSING DEVICE**

(57)      An information processing device (100) generates a logical Bell state of two logical qubits by entangling, between the two logical qubits, ancilla qubits arranged in each of the two logical qubits. For example, in each of the logical qubits, the information processing device (100) entangles, between the two logical qubits without intervention of a data qubit, all of the ancilla qubits arranged relatively closer to the other logical qubit than are the data qubits. In an example of Fig. 1, the information processing device (100) generates a logical Bell state of two logical qubits, for example, by entangling ancilla qubits (10, 11) between the two logical qubits without intervention of a data qubit.

FIG.1

EP 4 679 333 A1

**Description**

TECHNICAL FIELD

Embodiments discussed herein relate to an information processing program, an information processing method, and an information processing device.

BACKGROUND ART

Conventionally, to cope with errors caused by environmental noise, etc., there is a logical qubit in which multiple data qubits and multiple ancilla qubits for error correction are arranged in a two-dimensional lattice pattern. Also, there is a technique for generating a logical Bell state of two logical qubits in which ancilla qubits for merging are further arranged on each logical qubit. For example, it is conceivable to generate a logical Bell state of two logical qubits by entangling ancilla qubits for merging arranged on each logical qubit, performing merging, and performing splitting to repair each logical qubit.

As an example of a prior art, there is a technique for determining a measurement value of an encoded Bell measurement based on the probability for the calculated measurement value of the encoded Bell measurement. Also, for example, there is a technique for preparing a data qubit that holds a quantum state, a transfer qubit that transfers the quantum state of the data qubit, and a measurement qubit that measures the quantum state of the data qubit transferred via the transfer qubit. Also, for example, there is a technique for coupling a physical qubit to a logical qubit. Also, for example, there is a technique for coupling each data qubit to one or more ancilla qubits.

Patent Document 1: Japanese Laid-Open Patent Publication No. 2014-090341
Patent Document 2: Japanese Laid-Open Patent Publication No. 2022-057269
Patent Document 3: Published U.S. Patent Application No. 2020-0394101
Patent Document 4: Published U.S. Patent Application No. 2020-0119748

DISCLOSURE OF INVENTION

PROBLEM TO BE SOLVED BY THE INVENTION

In the conventional techniques, however, the processing time required for generating a logical Bell state may increase. For example, a problem occurs in that the processing time required to generate a logical Bell state increases because after entangling ancilla qubits for merging, the merging and then splitting to repair each logical qubit are carried out.

In one aspect, the present invention aims to suppress the increase in processing time required to generate the logical Bell state.

MEANS FOR SOLVING PROBLEM

According to one embodiment, an information processing program, an information processing method, and an information processing device are proposed that, in an arrangement of multiple qubits including multiple data qubits and multiple ancilla qubits in each of two logical qubits to be coupled together, generate a logical Bell state of the two logical qubits, by entangling, between the two logical qubits without intervention of the data qubit, all of the ancilla qubits arranged on the side of the each logical qubit coupled to the other logical qubit relative to the data qubits.

EFFECT OF THE INVENTION

According to one aspect, it is possible to suppress increases in the processing time required to generate a logical Bell state.

BRIEF DESCRIPTION OF DRAWINGS

Fig. 1 is an explanatory diagram depicting one example of an information processing method according to an embodiment.
Fig. 2 is a block diagram depicting an example of a hardware configuration of an information processing device 100.
Fig. 3 is a block diagram depicting an example of a functional configuration of the information processing device 100.

Fig. 4 is an explanatory diagram depicting an example of generating logical Bell states of logical qubits 410 and 420.

Fig. 5 is an explanatory diagram depicting an example of generating logical Bell states of the logical qubits 410 and 420.

Fig. 6 is a flowchart depicting an example of a first coupling process procedure.

Fig. 7 is a flowchart depicting an example of the first coupling process procedure.

Fig. 8 is an explanatory diagram depicting a quantum circuit 800 in which the information processing device 100 generates logical Bell states of the logical qubits 410 and 420 and performs error correction.

Fig. 9 is a flowchart depicting an example of a second coupling process procedure.

Fig. 10 is a flowchart depicting an example of the second coupling process procedure.

Fig. 11 is an explanatory diagram depicting a conventional example of generating a logical Bell state of logical qubits 1110 and 1120.

Fig. 12 is an explanatory diagram depicting the conventional example of generating the logical Bell state of the logical qubits 1110 and 1120.

Fig. 13 is an explanatory diagram depicting the conventional example of generating the logical Bell state of the logical qubits 1110 and 1120.

Fig. 14 is a flowchart depicting an example of a conventional process procedure.

Fig. 15 is a flowchart depicting an example of the conventional process procedure.

Fig. 16 is a flowchart depicting an example of the conventional process procedure.

Fig. 17 is an explanatory diagram depicting an example of fidelity of a measurement result of a data qubit.

Fig. 18 is an explanatory diagram depicting an example of the fidelity of the measurement result of a data qubit.

Fig. 19 is an explanatory diagram depicting an example of the fidelity of the measurement result of a data qubit.

Fig. 20 is an explanatory diagram depicting an example of the fidelity of the measurement result of a data qubit.

Fig. 21 is an explanatory diagram depicting an example of the fidelity of the measurement result of a data qubit.

Fig. 22 is an explanatory diagram depicting an example of the fidelity of the measurement result of a data qubit.

Fig. 23 is an explanatory diagram depicting an example of the fidelity of the measurement result of a data qubit.

Fig. 24 is an explanatory diagram depicting an example of the fidelity of the measurement result of a data qubit.

Fig. 25 is an explanatory diagram depicting an example of the fidelity of the measurement result of a data qubit.

Fig. 26 is an explanatory diagram depicting an example of the fidelity of the measurement result of a data qubit.

Fig. 27 is an explanatory diagram depicting an example of the fidelity of the measurement result of a data qubit.

Fig. 28 is an explanatory diagram depicting an example of the fidelity of the measurement result of a data qubit.

Fig. 29 is an explanatory diagram depicting an example of generating logical Bell states of logical qubits 2910 and 2920.

Fig. 30 is an explanatory diagram depicting an example of generating logical Bell states of the logical qubits 2910 and 2920.

Fig. 31 is an explanatory diagram depicting a reason why splitting is performed.

Fig. 32 is an explanatory diagram depicting a reason why the splitting is performed.

Fig. 33 is an explanatory diagram depicting a reason why the splitting does not need to be performed.

Fig. 34 is an explanatory diagram depicting a reason why the splitting does not need to be performed.

BEST MODE(S) FOR CARRYING OUT THE INVENTION

An information processing program, an information processing method, and an information processing device according to an embodiment of the present disclosure are described in detail with reference to the accompanying drawings.

(One Example of Information Processing Method According to Embodiment)

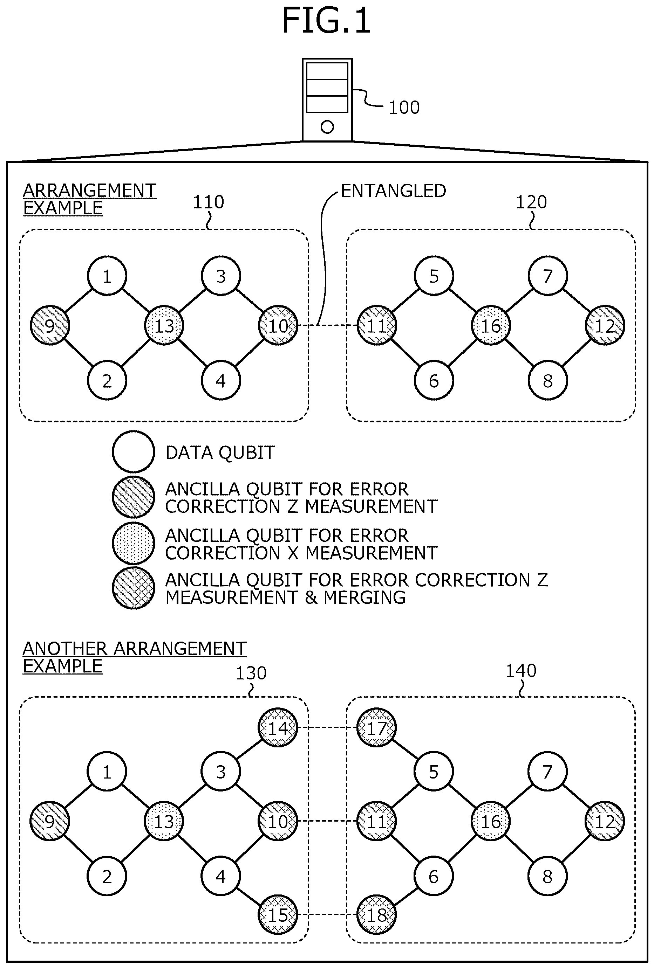

Fig. 1 is an explanatory diagram depicting one example of an information processing method according to an embodiment. An information processing device 100 is a computer that handles logical qubits. The information processing device 100 is, for example, a quantum computer. The information processing device 100 includes, for example, a qubit chip. The qubit chip represents, for example, a logical qubit.

The logical qubit is formed by arranging multiple qubits. The multiple qubits include multiple data qubits and multiple ancilla qubits. The data qubit represents a data value. The multiple ancilla qubits include an ancilla qubit for error correction and an ancilla qubit for merging.

The logical qubit includes multiple data qubits arranged in a matrix to provide a measure against errors caused by, for example, environmental noise, and imparts redundancy to the data qubits. The logical qubit includes an ancilla qubit for error correction arranged adjacent to at least one data qubit to provide a measure against errors caused by, for example, environmental noise. For example, the logical qubit includes an ancilla qubit for error correction arranged between two different data qubits.

The logical qubit includes an ancilla qubit for merging, arranged apart from the multiple data qubits arranged in a matrix to generate a logical Bell state with other logical qubits. The logical Bell state is a quantum entanglement state of two different logical qubits, in which the value of one logical qubit of the two different logical qubits is determined in response to the value of the other logical qubit being determined by observation.

Conventionally, the logical Bell state of two logical qubits is generated by entangling ancilla qubits for a merge process and arranged on each logical qubit, and then performing a merge process and a splitting to repair each logical qubit. For example, the logical state of each logical qubit may be destroyed depending on the merge process and thus, a splitting is performed to repair each logical qubit.

However, conventionally, it is difficult to generate a logical Bell state of two different logical qubits. For example, the processing time required to generate a logical Bell state of two different logical qubits may increase. For example, the ancilla qubits for a merge process and arranged on each logical qubit are entangled, and then a merge process is performed and a splitting to repair each logical qubit is performed and thus, a problem occurs in that the processing time required to generate a logical Bell state increases. In addition, since the merge process is performed, there is a risk of error propagation.

Conventionally, it is also difficult to perform error correction using an ancilla qubit for error correction. For example, this may lead to an increase in the time required to start implementing error correction. For example, there is a problem that error correction cannot be implemented until the logical Bell states of two different logical qubits are completely generated. Therefore, there is a problem that the error rate of data qubits tends to increase when generating logical Bell states of two different logical qubits.

Hence, in this embodiment, an information processing method that may facilitate generation of a logical Bell state will be described. For example, according to the information processing method, it is possible to suppress an increase in the processing time required to generate a logical Bell state.

In Fig. 1, there are two logical qubits to be coupled that are handled by the information processing device 100. The coupling is to generate a logical Bell state. Each logical qubit includes multiple qubits. The multiple qubits include multiple data qubits and multiple ancilla qubits. In the example of Fig. 1, the two logical qubits are, for example, a first logical qubit 110 and a second logical qubit 120.

The first logical qubit 110, for example, includes four data qubits 1 to 4 arranged in a matrix of two rows and two columns. The first logical qubit 110, for example, includes an ancilla qubit 9 for error correction Z measurement and coupled to data qubits 1 and 2. The first logical qubit 110, for example, includes an ancilla qubit 10 for error correction Z measurement and for merging coupled to the data qubits 3 and 4. The ancilla qubit 10 is for merging and is an entangled ancilla qubit. The first logical qubit 110, for example, includes an ancilla qubit 13 for error correction X measurement coupled to the data qubits 1 to 4.

The second logical qubit 120, for example, includes four data qubits 5 to 8 arranged in a matrix of two rows and two columns. The second logical qubit 120, for example, includes an ancilla qubit 12 for error correction Z measurement and coupled to the data qubits 7 and 8. The second logical qubit 120, for example, includes an ancilla qubit 11 for error correction Z measurement and merging, which is coupled to the data qubits 5 and 6. The ancilla qubit 11 is for merging and is an entangled ancilla qubit. The second logical qubit 120, for example, includes an ancilla qubit 16 that is for error correction X measurement and coupled to the data qubits 5 to 8.

As described, in the example of Fig. 1, the qubits 1 to 13, and 16 are arranged so that the number of pairs of entangled ancilla qubits is minimized in the first logical qubit 110 and the second logical qubit 120. For example, the pair of entangled ancilla qubits is one pair of ancilla qubits 10 and 11.

(1-1) The information processing device 100 generates a logical Bell state of two logical qubits. The information processing device 100 generates a logical Bell state of two logical qubits, for example, by entangling between the two logical qubits, the ancilla qubits arranged in each logical qubit of the two logical qubits.

For example, between the two logical qubits, the information processing device 100 entangles all of the ancilla qubits arranged closer to the side coupled to the other logical qubit than are the data qubits in each logical qubit, without going through a data qubit. The entanglement is implemented, for example, by a quantum state transfer technique.

In the example of Fig. 1, the ancilla qubit arranged closer to the side of the first logical qubit 110 coupled to the second logical qubit 120 than is the data qubit in terms of arrangement is, for example, the ancilla qubit 10. Similarly, the ancilla qubit arranged closer to the side of the second logical qubit 120 coupled to the first logical qubit 110 than is the data qubit in terms of arrangement is, for example, the ancilla qubit 11. Therefore, the information processing device 100, for example, generates a logical Bell state of two logical qubits by entangling the ancilla qubits 10 and 11 between the two logical qubits without a data qubit.

This allows the information processing device 100 to prevent the logical states of each logical qubit from being destroyed in response to the merge process, and may eliminate the need to perform a splitting to repair each logical qubit. Therefore, the information processing device 100 may easily generate logical Bell states of two different logical qubits. The information processing device 100 may, for example, reduce the processing time required to generate the logical Bell state of two different logical qubits. The information processing device 100 may, for example, avoid performing a splitting, and may reduce the error occurrence rate of the data qubits.

Furthermore, the information processing device 100 may prevent the logical states of each logical qubit from being destroyed in response to a merge process, and may make error correction possible before completing the generation of the logical Bell state of the two different logical qubits. Therefore, the information processing device 100 may reduce the time required to start performing error correction. The information processing device 100 may reduce the time required to complete the execution of error correction after starting the generation of the logical Bell state of the two different logical qubits. The information processing device 100 may reduce the error occurrence rate of the data qubits.

Here, a case has been described in which multiple qubits are arranged in each logical qubit so that the number of pairs of entangled ancilla qubits is minimized, but this is not limited thereto. For example, regardless of the number of ancilla qubits to be entangled, multiple qubits may be arranged in each logical qubit. For example, as in the logical qubits 130 and 140 depicted in Fig. 1, there may be three pairs of ancilla qubits to be entangled.

Here, while a case where the information processing device 100 is a quantum computer including a qubit chip has been described, configuration is not limited hereto. For example, the information processing device 100 may execute a simulator of a quantum computer. In this case, the information processing device 100 generates logical Bell states of two different logical qubits in the simulator of the quantum computer.

(Example of Hardware Configuration of Information Processing Device 100)

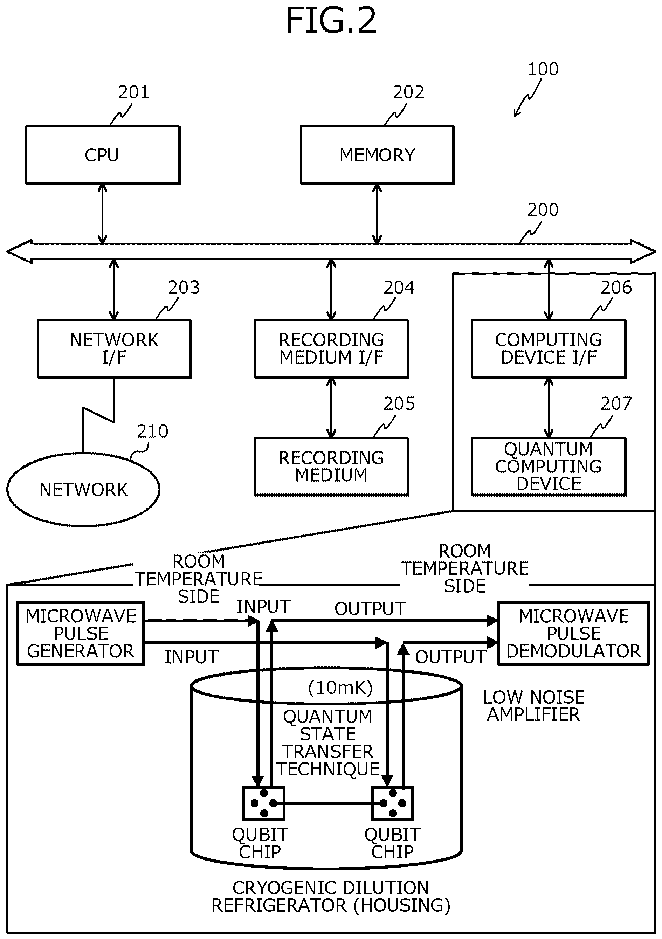

Next, an example of hardware configuration of the information processing device 100 is described with reference to Fig. 2.

Fig. 2 is a block diagram depicting an example of a hardware configuration of the information processing device 100. In Fig. 2, the information processing device 100 has a central processing unit (CPU) 201, a memory 202, a network interface (I/F) 203, a recording medium I/F 204, and a recording medium 205. The information processing device 100 further has a computing device I/F 206 and a quantum computing device 207. Further, the components are coupled to each other by a bus 200.

Here, the CPU 201 governs overall control of the information processing device 100. The memory 202 includes, for example, a read-only memory (ROM), a random-access memory (RAM), and a flash ROM. For example, the flash ROM and the ROM store various programs, and the RAM is used as a work area for the CPU 201. The programs stored in the memory 202 are loaded onto the CPU 201, whereby the CPU 201 executes encoded processes.

The network I/F 203 is coupled to the network 210 through a communications line and is coupled to other computers via the network 210. The network I/F 203 administers an internal interface with the network 210 and controls the input and output of data from other computers. The network I/F 203 is, for example, a modem or a local area network (LAN) adapter.

The recording medium I/F 204 controls the reading and writing of data with respect to the recording medium 205 under the control of the CPU 201. The recording medium I/F 204 is, for example, a disk drive, a solid-state drive (SSD), a universal serial bus (USB) port, etc. The recording medium 205 is a nonvolatile memory that stores therein data written thereto under the control of the recording medium I/F 204. The recording medium 205 is, for example, a disk, a semiconductor memory, a USB memory, etc. The recording medium 205 may be removable from the information processing device 100. merge process

The computing device I/F 206 controls access to the quantum computing device 207 under the control of the CPU 201. The computing device I/F 206 uses a microwave pulse generator to convert an output signal from the CPU 201 into an input signal for the quantum computing device 207 and transmits the resulting input signal to the quantum computing device 207. The computing device I/F 206 uses a microwave pulse demodulator to convert an output signal from the quantum computing device 207 into an input signal for the CPU 201 and transmits the resulting input signal to the CPU 201. The quantum computing device 207 is a computing device equipped with one or more qubit chips cooled to an extremely low temperature of 10 mK (kelvin). The qubit chip represents, for example, a logical qubit. The quantum computing device 207 uses one or more qubit chips to perform a predetermined computation in response to an input signal, and outputs an output signal corresponding to the result of the predetermined computation.

In addition to the components above, the information processing device 100 may have, for example, a keyboard, a mouse, a display, a printer, a scanner, a microphone, a speaker, etc. The information processing device 100 may also have the recording medium I/F 404 and recording medium 405 in plural. Further, in the information processing device 100, the recording medium I/F 404 and the recording medium 405 may be omitted.

(Example of Functional Configuration of Information Processing Device 100)

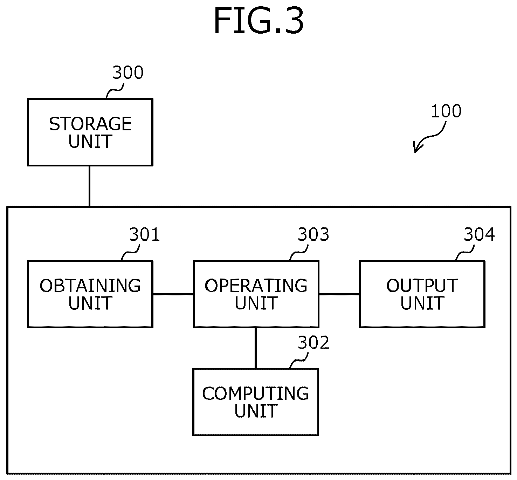

An example of a functional configuration of the information processing device 100 will then be described with reference to Fig. 3.

Fig. 3 is a block diagram depicting an example of a functional configuration of the information processing device 100. The information processing device 100 includes a storage unit 300, an obtaining unit 301, a computing unit 302, an operating unit 303, and an output unit 304.

The storage unit 300 is implemented by, for example, a storage area such as the memory 202 or the recording medium 205 depicted in Fig. 2. In the following, while a case where the storage unit 300 is included in the information processing device 100 will be described, configuration is not limited hereto. For example, the storage unit 300 may be included in a device different from the information processing device 100, and the stored contents of the storage unit 300 may be referred to from the information processing device 100.

The obtaining unit 301 to the output unit 304 function as an example of a control unit. For example, functions of the obtaining unit 301 to the output unit 304 are implemented by, for example, causing the CPU 201 to execute a program stored in a storage area such as the memory 202 or the recording medium 205 depicted in Fig. 2, or by the network I/F 203. The processing results of each functional unit are stored to, for example, a storage area such as the memory 202 or the recording medium 205 depicted in Fig. 2.

The storage unit 300 stores various information that is referred to or updated in the processing by each functional unit. The storage unit 300 stores, for example, the arrangement of multiple qubits in a logical qubit. The logical qubit is formed by arranging multiple qubits.

The qubit is, for example, a superconducting qubit. The qubit may be, for example, other than a superconducting qubit. The multiple qubits include multiple data qubits and multiple ancilla qubits. The data qubit represents a data value. The multiple ancilla qubits include an ancilla qubit for error correction and an ancilla qubit for merging.

For example, the storage unit 300 stores the arrangement of multiple qubits in each logical qubit of two logical qubits that are to be coupled. For example, it is preferable that the arrangement of the multiple qubits in each logical qubit satisfies a condition that all of the ancilla qubits present on the side of the logical qubit closer to the other logical qubit than are the data qubits are to be entangled.

Each logical qubit is preferably a logical qubit in which multiple qubits are arranged so that the number of ancilla qubits to be entangled is minimized. For example, with one or more ancilla qubits as nodes, each logical qubit is arranged in a binary tree pattern including two or more data qubits as leaves arranged on the side coupled to the other logical qubit and one ancilla qubit as a root to be directly entangled.

Each logical qubit is, for example, arranged in a matrix pattern of two rows and two columns, with four data qubits. Furthermore, each logical qubit is, for example, arranged with one ancilla qubit directly coupled to two data qubits arranged on the side coupled to the other logical qubit.

Each logical qubit is, for example, arranged in a matrix pattern of three rows and three columns, with nine data qubits. Furthermore, each logical qubit is, for example, arranged in a binary tree pattern with three data qubits arranged on the side coupled to the other logical qubit as leaves, and one ancilla qubit that is directly entangled as the root, and three ancilla qubits as nodes. The arrangement is set, for example, by a user in advance.

The obtaining unit 301 obtains various information used in the processing of each functional unit. The obtaining unit 301 stores the obtained various information to the storage unit 300 or outputs the obtained various information to the functional units. The obtaining unit 301 may also output various information stored in the storage unit 300 to the functional units. The obtaining unit 301 obtains various information based on, for example, an operational input by the user. The obtaining unit 301 may receive various information from, for example, a device different from the information processing device 100. The obtaining unit 301 obtains, for example, a processing request requesting the generation of a logical Bell state of two logical qubits.

The obtaining unit 301 may receive a start trigger for starting processing by any of the functional units. The start trigger may be, for example, a predetermined operational input by a user. The start trigger may also be, for example, the receipt of predetermined information from another computer. The start trigger may also be, for example, the output of predetermined information by any of the functional units. For example, the obtaining unit 301 regards the reception of a processing request as a start trigger for starting processing by the operating unit 303.

The computing unit 302 implements logical qubits. The computing unit 302 implements a logical qubit formed by multiple qubits arranged as described above, using plural qubit chips each representing a different qubit. This allows the computing unit 302 to make the logical qubit available.

The operating unit 303 controls the computing unit 302 to generate a logical Bell state of two logical qubits. The operating unit 303 generates a logical Bell state of two logical qubits, for example, by entangling between the two logical qubits, ancilla qubits arranged in each logical qubit of the two logical qubits. For example, between the two logical qubits, the operating unit 303 entangles all of the ancilla qubits arranged closer to the side coupled to the other logical qubit than are the data qubits in each logical qubit, without going through the data qubits. This allows the operating unit 303 to reduce the processing time required to generate a logical Bell state of two logical qubits.

When generating the logical Bell state of two logical qubits, the operating unit 303 performs error correction of the data qubit by using an ancilla qubit for error correction, among the multiple qubits in each logical qubit. This allows the operating unit 303 to reduce the time required to start performing error correction.

The output unit 304 outputs the processing result of at least one of the functional units. The output format is, for example, display on a display, print output to a printer, transmission to an external device via the network I/F 203, or storage in a storage area such as the memory 202 or the recording medium 205. This allows the output unit 304 to notify the user of the processing result of at least one of the functional units, thereby improving the convenience of the information processing device 100. The output unit 304 outputs, for example, a notification indicating that the logical Bell state of two logical qubits has been generated so that the user may refer to it.

(An Example of Operation of Information Processing Device 100)

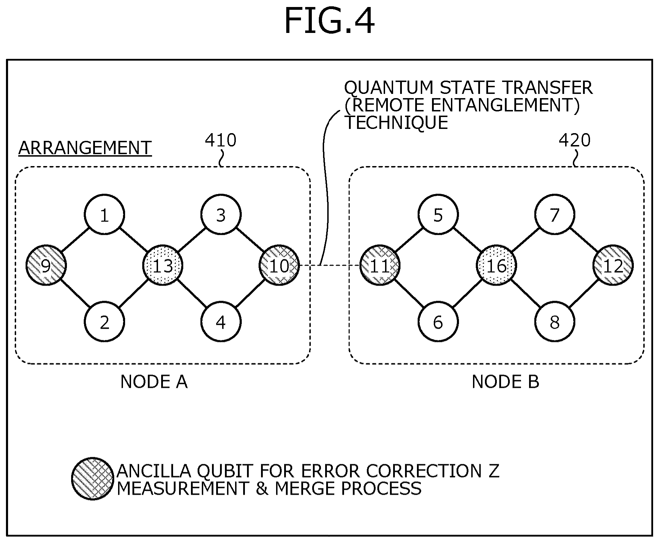

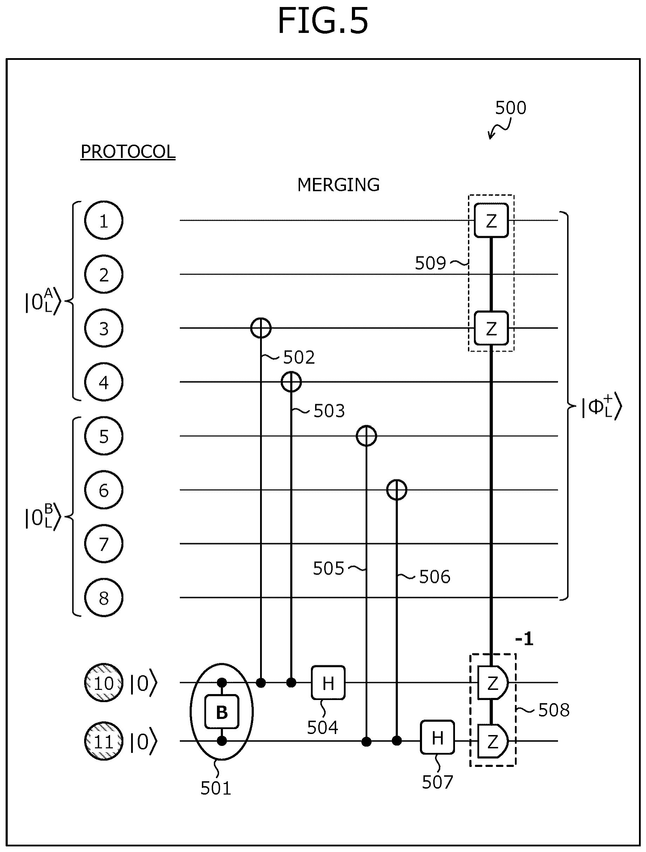

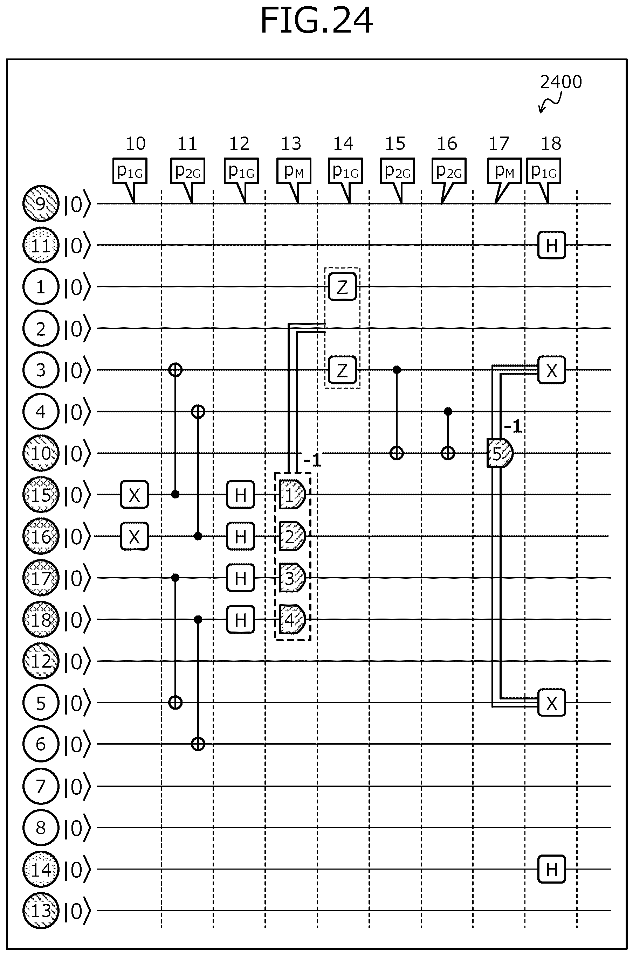

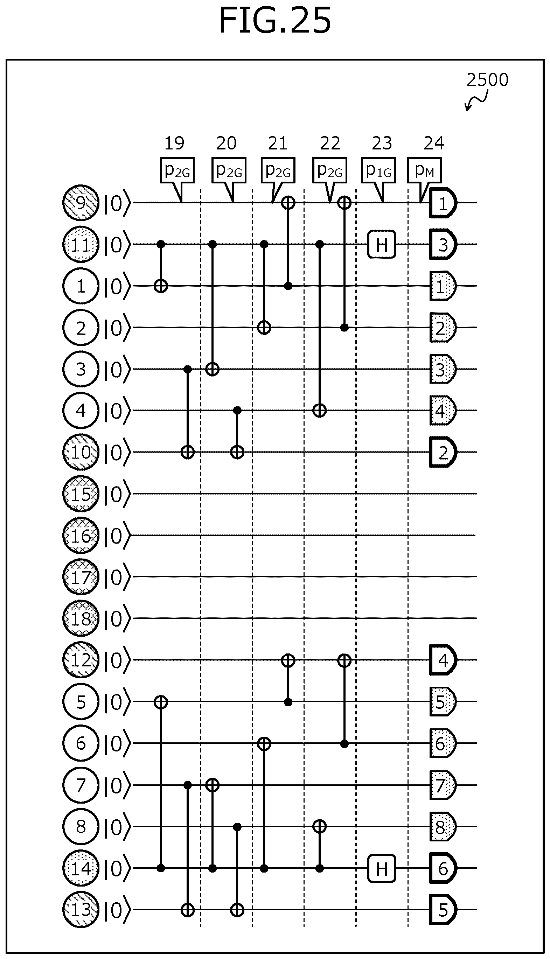

Referring next to Figs. 4 to 32, an example of the operation of the information processing device 100 will be described. For example, first, an example of the information processing device 100 generating logical Bell states of logical qubits 410 and 420 will be described with reference to Figs. 4 and 5.
Figs. 4 and 5 are explanatory diagrams depicting an example of generating logical Bell states of the logical qubits 410 and 420. Fig. 4 for example depicts an example of an arrangement of multiple qubits in the logical qubits 410 and 420 for which a logical Bell state is to be generated.
For example, the arrangement of multiple qubits in the logical qubits 410 and 420 satisfies the condition that all of the ancilla qubits present on the side of one logical qubit closer to another logical qubit than are data qubits therein are to be entangled.
As depicted in Fig. 4, the logical qubit 410 is present, for example, in node A. The logical qubit 410, for example, includes the four data qubits 1 to 4 arranged in a matrix of two rows and two columns. The logical qubit 410, for example, includes an ancilla qubit 9 for error correction Z measurement and coupled to the data qubits 1 and 2. The logical qubit 410 for example includes an ancilla qubit 10 for error correction Z measurement and merging coupled to the data qubits 3 and 4. The logical qubit 410, for example, includes an ancilla qubit 13 for error correction X measurement coupled to the data qubits 1 to 4.
As depicted in Fig. 4, the logical qubit 420 is present in node B, for example. The logical qubit 420, for example, includes the four data qubits 5 to 8 arranged in a matrix of two rows and two columns. The logical qubit 420 for example includes an ancilla qubit 12 for error correction Z measurement and coupled to the data qubits 7 and 8. The logical qubit 420 for example includes an ancilla qubit 11 for error correction Z measurement and merging coupled to data qubits 5 and 6. For example, the logical qubit 420 includes an ancilla qubit 16 for error correction X measurement, which is coupled to data qubits 5 to 8. Next, we move on to the explanation of Fig. 5.
Fig. 5 depicts a quantum circuit 500 that generates the logical Bell states of the logical qubits 410 and 420. In Fig. 5, each horizontal line of quantum circuit 500 is a time axis corresponding to one of the qubits.
Qubits 1 to 4 are each in a logical state $|0_L^A\rangle$. The notation $|x\rangle$ indicates a state in which x is observed with a 100% probability. "x" is, for example, a value. The logical state $|0_L^A\rangle$ is, for example, $|0000\rangle+|1111\rangle$. Qubits 5 to 8 are each in a logical state $|0_L^B\rangle$. The logical state $|0_L^B\rangle$ is, for example, $|0000\rangle+|1111\rangle$. Qubits 10 and 11 are each in a state $|0\rangle$.
The information processing device 100 executes quantum state transfer 501, which sets the qubits 10 and 11 to a state $|00\rangle+|11\rangle$. This allows the information processing device 100 to entangle the qubits 10 and 11. The information processing device 100 executes a controlled-NOT gate 502, with the qubit 10 as the control bit and the qubit 3 as the target bit. The information processing device 100 executes a controlled-NOT gate 503, with the qubit 10 as the control bit and the qubit 4 as the target bit.
The information processing device 100 executes a Hadamard gate 504 for the qubit 10. The information processing device 100 executes a controlled-NOT gate 505, with the qubit 11 as the control bit and the qubit 5 as the target bit. The information processing device 100 executes a controlled-NOT gate 506, with the qubit 11 as the control bit and the qubit 6 as the target bit.
The information processing device 100 executes a Hadamard gate 507 for the qubit 11. The information processing device 100 executes a Z measurement 508 for the qubits 10 and 11. When the product of the measurement results of the qubits 10 and 11 is 1, the information processing device 100 executes a Z gate 509 for the qubits 1 and 3.
This allows the information processing device 100 to generate the logical Bell state of the logical qubits 410 and 420 without performing a split. For example, the information processing device 100 may set qubits 1 to 8 to a logical Bell state $|\Phi_L^+\rangle$. Therefore, the information processing device 100 may reduce the processing time required to generate the logical Bell state of the logical qubits 410 and 420.

(First Connection Process Procedure)

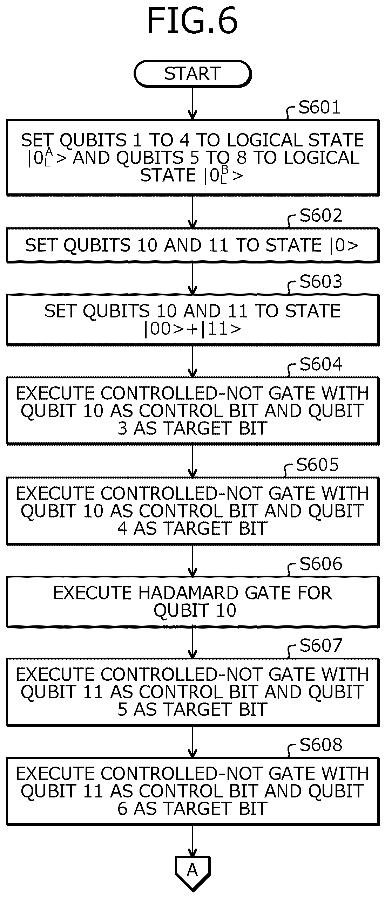

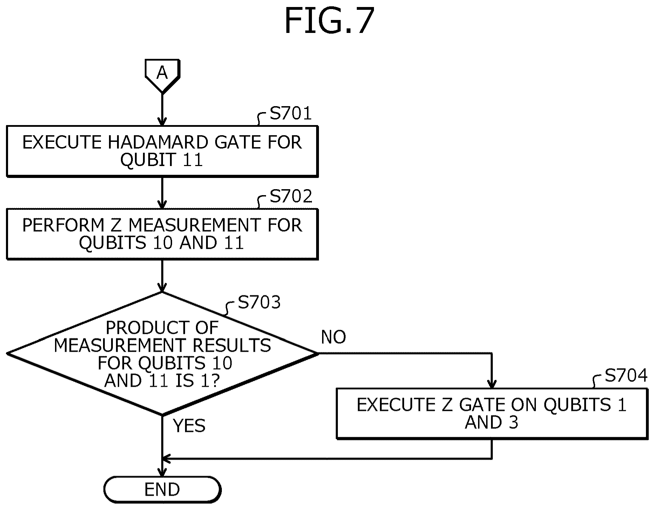

An example of a first coupling process procedure executed by the information processing device 100 will then be described with reference to Figs. 6 and 7. The first coupling process corresponds to the operation of generating the logical Bell states of the logical qubits 410 and 420 depicted in Fig. 5. The first coupling process is implemented by, for example, the CPU 201, the storage area such as the memory 202 and the recording medium 205, and the network I/F 203 depicted in

EP 4 679 333 A1

Fig. 2.

Figs. 6 and 7 are flowcharts depicting an example of the first coupling process procedure. In Fig. 6, the information processing device 100 sets the qubits 1 to 4 to the logical state $|0_L^A>$ and the qubits 5 to 8 to the logical state $|0_L^B>$ (step S601).

The information processing device 100 sets the qubits 10 and 11 to the state $|0>$ (step S602). The information processing device 100 executes quantum state transfer to set the qubits 10 and 11 to the state $|00>+|11>$ (step S603).

The information processing device 100 executes a controlled-NOT gate with the qubit 10 as the control bit and the qubit 3 as the target bit (step S604). The information processing device 100 executes a controlled-NOT gate with the qubit 10 as the control bit and the qubit 4 as the target bit (step S605). The information processing device 100 executes a Hadamard gate for the qubit 10 (step S606).

The information processing device 100 executes a controlled-NOT gate with the qubit 11 as the control bit and the qubit 5 as the target bit (step S607). The information processing device 100 executes a controlled-NOT gate with the qubit 11 as the control bit and the qubit 6 as the target bit (step S608). Next, we move on to the explanation of Fig. 7.

In Fig. 7, the information processing device 100 executes a Hadamard gate for the qubit 11 (step S701). The information processing device 100 performs Z measurement for the qubits 10 and 11 (step S702). The information processing device 100 determines whether the product of the measurement results of the qubits 10 and 11 is 1 (step S703).

When the product of the measurement results of the qubits 10 and 11 is not 1 (step S703: NO), the information processing device 100 executes a Z gate for the qubits 1 and 3 (step S704) and ends the first coupling process. On the other hand, when the product of the measurement results of the qubits 10 and 11 is 1 (step S703: YES), the information processing device 100 ends the first coupling process. This allows the information processing device 100 to generate a logical state $|0_L^A>|0_L^B>+|1_L^A>|1_L^B>$.

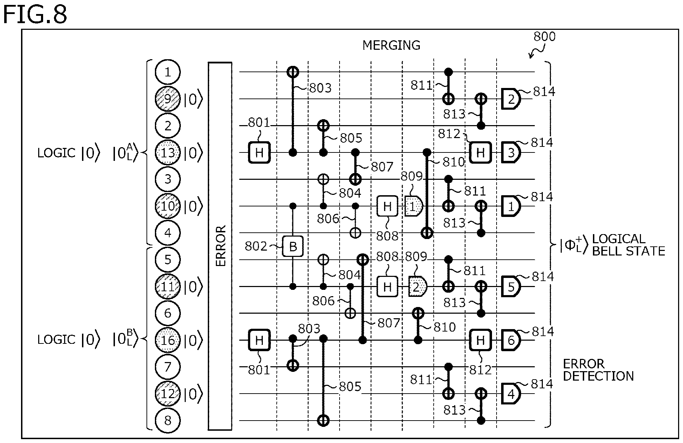

An example in which the information processing device 100 generates the logical Bell state of the logical qubits 410 and 420 and performs error correction will then be described with reference to Fig. 8.

Fig. 8 is an explanatory diagram depicting a quantum circuit 800 in which the information processing device 100 generates logical Bell states of the logical qubits 410 and 420 and performs error correction. In Fig. 8, each horizontal line of the quantum circuit 800 is a time axis corresponding to any one of the qubits.

The qubits 1 to 4 are each in the logical state $|0_L^A>$. qubits 5 to 8 are each in the logical state $|0_L^B>$. qubits 9 to 13 and 16 are each in the state $|0>$. For example, the information processing device 100 performs multiple quantum operations for qubits 1 to 13 and 16 in stages, as depicted below. For example, two or more quantum operations belonging to the same stage may be performed in parallel. The thick lines in Fig. 8 represent quantum operations to be performed for error correction among the multiple quantum operations.

(8-1) To generate a logical Bell state, at stage 1, the information processing device 100 executes a Hadamard gate 801 for qubits 13 and 16.

(8-2) To generate a logical Bell state, at stage 2, the information processing device 100 executes quantum state transfer 802, which sets the qubits 10 and 11 to the state $|00>+|11>$. For error correction, at stage 2, the information processing device 100 executes a controlled-NOT gate 803, with the qubits 13 and 16 as control bits and qubits 1 and 7 as target bits.

(8-3) To generate a logical Bell state, at stage 3, the information processing device 100 executes a controlled-NOT gate 804, with qubit 10 as the control bit and qubit 3 as the target bit. To generate a logical Bell state, at stage 3, the information processing device 100 executes the controlled-NOT gate 804 with qubit 11 as the control bit and qubit 5 as the target bit. For error correction, at stage 3, the information processing device 100 executes a controlled-NOT gate 805 with the qubits 13 and 16 as the control bits and qubits 2 and 8 as the target bits.

(8-4) To generate a logical Bell state, at stage 4, the information processing device 100 executes a controlled-NOT gate 806 with qubit 10 as the control bit and qubit 4 as the target bit. To generate a logical Bell state, at stage 4, the information processing device 100 executes the controlled-NOT gate 806 with qubit 11 as the control bit and qubit 6 as the target bit. For error correction, at stage 4, the information processing device 100 executes a controlled-NOT gate 807 with the qubits 13 and 16 as the control bits and qubits 3 and 5 as the target bits.

(8-5) To generate a logical Bell state, at stage 5, the information processing device 100 executes a Hadamard gate 808 for the qubits 10 and 11.

(8-6) To generate a logical Bell state, the information processing device 100 executes a Z measurement 809 for the qubits 10 and 11 at stage 6. For error correction, at stage 6, the information processing device 100 executes a controlled-NOT gate 810 with the qubits 13 and 16 as the control bits and qubits 4 and 6 as the target bits.

(8-7) For error correction, at stage 7, the information processing device 100 executes a controlled-NOT gate 811 with qubits 1, 3, 5, and 7 as control bits and qubits 9, 10, 11, and 12 as target bits.

(8-8) For error correction, at step 8, the information processing device 100 executes a controlled-NOT gate 812 with qubits 2, 4, 6, and 8 as control bits and the qubits 9, 10, 11, and 12 as target bits. For error correction, the information processing device 100 executes a Hadamard gate 813 for the qubits 13 and 16 at stage 8.

(8-9) For error correction, the information processing device 100 executes a Z measurement 814 for qubits 9 to 13

8

and 16. This allows the information processing device 100 to generate logical Bell states of the logical qubits 410 and 420 without performing splitting. For example, the information processing device 100 may set the qubits 1 to 8 to a logical Bell state $|\Phi^+>$. Hence, the information processing device 100 may reduce the processing time required to generate the logical Bell state of the logical qubits 410 and 420.

The information processing device 100 may generate the logical Bell state of the logical qubits 410 and 420 and perform error correction. For example, the information processing device 100 may set the qubits 1 to 8 to a logical Bell state $|\Phi_L^+>$. Thus, the information processing device 100 may reduce the time required to start performing error correction. The information processing device 100 may reduce the time required from starting to generate the logical Bell state of the logical qubits 410 and 420 to completing performing error correction. The information processing device 100 may reduce the risk of error propagation.

(Second Connection Process Procedure)

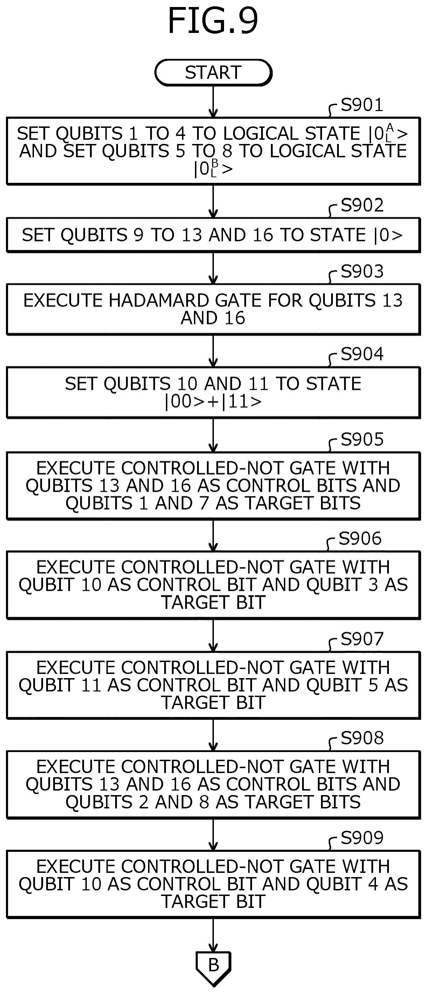

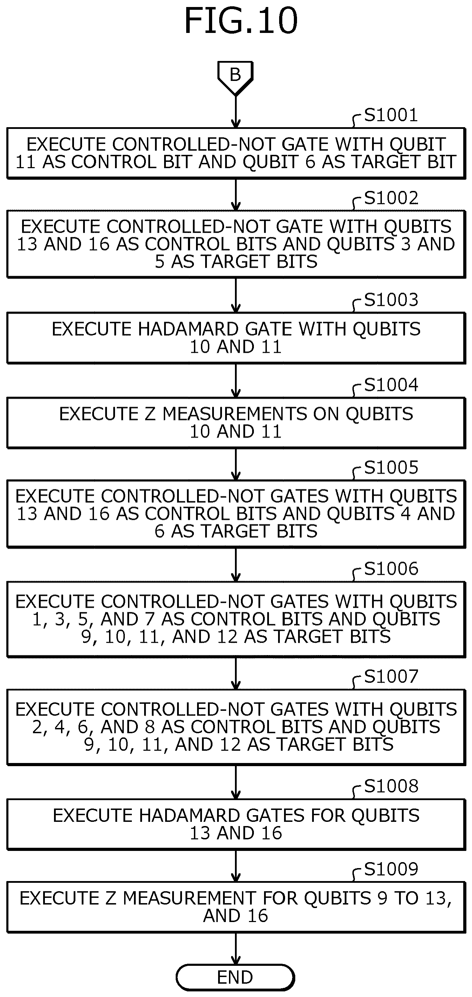

An example of the second coupling process procedure executed by the information processing device 100 will then be described with reference to Figs. 9 and 10. The second coupling process corresponds to the operation of generating the logical Bell states of the logical qubits 410 and 420 depicted in Fig. 8 and performing error correction. The second coupling process is implemented, for example, by the CPU 201 depicted in Fig. 2, storage areas such as the memory 202 and the recording medium 205, and the network I/F 203.

Figs. 9 and 10 are flowcharts depicting an example of the second coupling process procedure. In Fig. 8, the information processing device 100 sets the qubits 1 to 4 to the logical state $|0_L^A>$, respectively, and sets the qubits 5 to 8 to the logical state $|0_L^B>$ (step S901). The information processing device 100 sets the qubits 9 to 13 and 16 to the state $|0>$ (step S902).

The information processing device 100 executes a Hadamard gate for the qubits 13 and 16 (step S903). The information processing device 100 executes a quantum state transfer to set the qubits 10 and 11 to the state $|00>+|11>$ (step S904).

The information processing device 100 executes a controlled-NOT gate with the qubits 13 and 16 as control bits and qubits 1 and 7 as target bits (step S905). The information processing device 100 executes a controlled-NOT gate with qubit 10 as the control bit and qubit 3 as the target bit (step S906). The information processing device 100 executes a controlled-NOT gate with qubit 11 as the control bit and qubit 5 as the target bit (step S907).

The information processing device 100 executes a controlled-NOT gate with the qubits 13 and 16 as the control bits and the qubits 2 and 8 as the target bits (step S908). The information processing device 100 executes a controlled-NOT gate with the qubit 10 as the control bit and the qubit 4 as the target bit (step S909). The information processing device 100 proceeds to the process of step S1001 described later in Fig. 10.

In Fig. 10, the information processing device 100 executes a controlled-NOT gate with the qubit 11 as the control bit and the qubit 6 as the target bit (step S1001).

The information processing device 100 executes a controlled-NOT gate with the qubits 13 and 16 as the control bits and the qubits 3 and 5 as the target bits (step S1002). The information processing device 100 executes a Hadamard gate with the qubits 10 and 11 (step S1003). The information processing device 100 performs Z measurements for the qubits 10 and 11 (step S1004).

The information processing device 100 performs controlled-NOT gates with the qubits 13 and 16 as control bits and the qubits 4 and 6 as target bits (step S1005). The information processing device 100 performs controlled-NOT gates for the qubits 1, 3, 5, and 7 as control bits and the qubits 9, 10, 11, and 12 as target bits (step S1006).

The information processing device 100 performs controlled-NOT gates with the qubits 2, 4, 6, and 8 as the control bits and the qubits 9, 10, 11, and 12 as the target bits (step S1007). The information processing device 100 performs Hadamard gates for the qubits 13 and 16 (step S1008). The information processing device 100 performs Z measurement for the qubits 9 to 13, and 16 (step S1009). The information processing device 100 ends the second coupling process. As a result, the information processing device 100 may generate the logical state $|0_L^A>|0_L^B>+|1_L^A>|1_L^B>$.

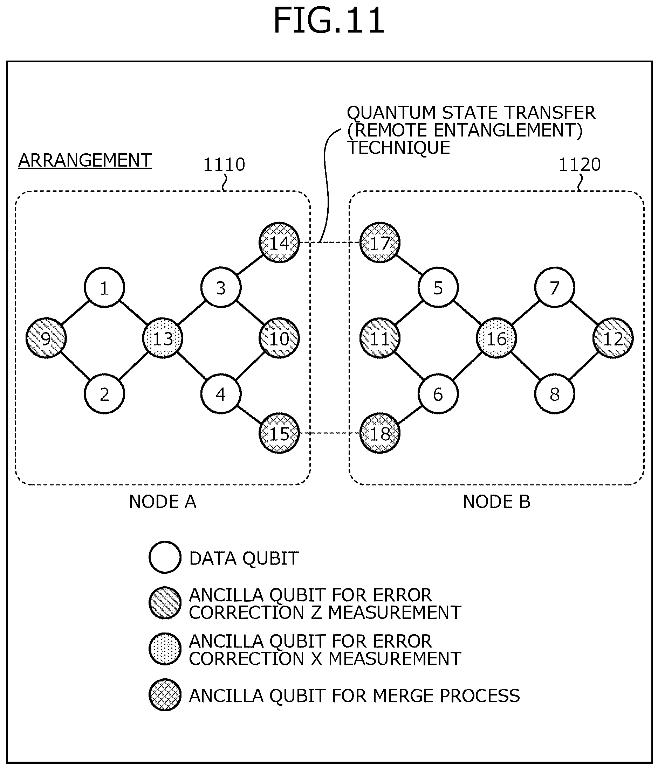

A conventional method for generating the logical Bell state of logical qubits 1110 and 1120 will then be described with reference to Figs. 11 to 13, and the conventional method will be compared with the method of the information processing device 100.

Figs. 11, 12, and 13 are explanatory diagrams depicting a conventional example of generating the logical Bell state of the logical qubits 1110 and 1120. Fig. 11 for example depicts a conventional example of the arrangement of multiple qubits in the logical qubits 1110 and 1120 for which a logical Bell state is to be generated.

As depicted in Fig. 11, the logical qubit 1110 is present, for example, at node A. The qubit 1110 for example includes the four data qubits 1 to 4 arranged in a matrix of two rows and two columns. The logical qubit 1110 for example includes an ancilla qubit 9 for error correction Z measurement and coupled to the data qubits 1 and 2. The logical qubit 1110 for example includes an ancilla qubit 10 for error correction Z measurement and coupled to data qubits 3 and 4. The logical qubit 1110 for example includes an ancilla qubit 14 for merging coupled to data qubit 3, and an ancilla qubit 15 for merging coupled to data qubit 4. The logical qubit 1110 for example includes an ancilla qubit 13 for error correction X measurement coupled to the data qubits 1 to 4.

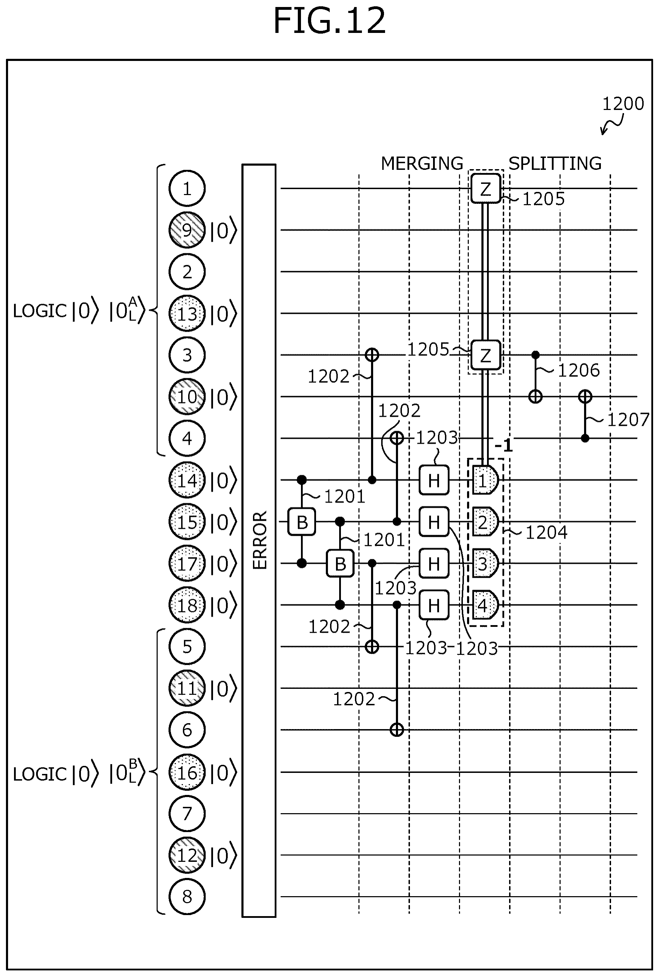

As depicted in Fig. 11, the logical qubit 1120 is present in node B, for example. The logical qubit 1120 for example includes four data qubits 5 to 8 arranged in a matrix of two rows and two columns. The logical qubit 1120 for example includes an ancilla qubit 12 for error correction Z measurement and coupled to data qubits 7 and 8. The logical qubit 1120 for example includes an ancilla qubit 11 for error correction Z measurement and coupled to data qubits 5 and 6. The logical qubit 1120 for example includes an ancilla qubit 17 for merging coupled to data qubit 5 and an ancilla qubit 18 for merging coupled to data qubit 6. The logical qubit 1120 for example includes an ancilla qubit 16 for error correction X measurement coupled to data qubits 5 to 8. Next, we move on to the explanation of Fig. 12.

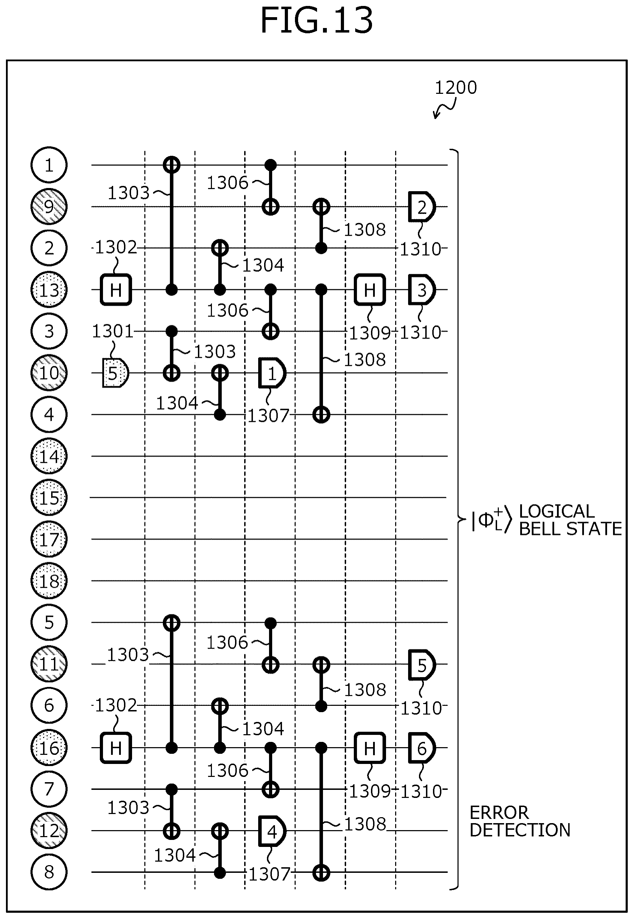

Figs. 12 and 13 depict a quantum circuit 1200 that generates logical Bell states of the logical qubits 1110 and 1120 and performs error correction. In Fig. 12, each horizontal line of quantum circuit 1200 is a time axis corresponding to one of the qubits.

The qubits 1 to 4 are each in the logical state $|0_L^A>$. The qubits 5 to 8 are each in the logical state $|0_L^B>$. The qubits 9-18 are each in the state $|0>$. A conventional computer implementing a conventional method performs multiple quantum operations for qubits 1-18 in stages, for example as depicted below. For example, two or more quantum operations belonging to the same stage may be executed in parallel. The thick lines in Fig. 13 represent quantum operations executed for error correction among multiple quantum operations.

(12-1) To generate a logical Bell state, the conventional computer executes quantum state transfer 1201 in stage 1, which sets qubits 14 and 17 and qubits 15 and 18 to the state $|00>+|11>$.

(12-2) To generate a logical Bell state, the conventional computer executes a controlled-NOT gate 1202 in stage 2, with qubit 14 as the control bit and qubit 3 as the target bit. To generate a logical Bell state, at stage 2, the conventional computer executes the controlled-NOT gate 1202 with qubit 17 as the control bit and qubit 5 as the object bit.

To generate a logical Bell state, at stage 2, the conventional computer executes the controlled-NOT gate 1202 with qubit 15 as the control bit and qubit 4 as the object bit. To generate a logical Bell state, at stage 2, the conventional computer executes the controlled-NOT gate 1202 with qubit 18 as the control bit and qubit 6 as the object bit.

(12-3) To generate a logical Bell state, at stage 3, the conventional computer executes a Hadamard gate 1203 for qubits 14 to 18.

(12-4) To generate a logical Bell state, at stage 4, the conventional computer executes a Z measurement 1204 for the qubits 14 to 18. To generate a logical Bell state, at stage 4, if the product of the measurement results of the qubits 14 to 18 is 1, the conventional computer executes a Z gate 1205 for qubits 1 and 3.

(12-5) To generate a logical Bell state, at stage 5, the conventional computer executes a controlled-NOT gate 1206 with qubit 3 as the control bit and qubit 10 as the target bit.

(12-6) To generate a logical Bell state, at stage 6, the conventional computer executes a controlled-NOT gate 1207 with qubit 4 as the control bit and qubit 10 as the target bit. Next, we move on to the explanation of Fig. 13. Fig. 13 for example depicts a continuation of quantum circuit 1200.

(13-1) To generate a logical Bell state, at stage 7, the conventional computer executes a Z-measurement 1301 for qubit 10. For error correction, at stage 7, the conventional computer executes a Hadamard gate 1302 for the qubits 13 and 16.

(13-2) For error correction, at stage 8, the conventional computer executes a controlled-NOT gate 1303 with qubits 13, 16, 3, and 7 as control bits and qubits 1, 5, 10, and 12 as target bits.

(13-3) For error correction, at stage 9, the conventional computer executes a controlled-NOT gate 1304 with qubits 13, 16, 4, and 8 as control bits and qubits 2, 6, 10, and 12 as target bits.

(13-4) For error correction, at stage 10, the conventional computer executes a controlled-NOT gate 1306 with qubits 13, 16, 1, and 5 as control bits and qubits 3, 7, 9, and 11 as target bits. For error correction, the conventional computer performs a Z measurement 1307 for qubits 10 and 12 at stage 10.

(13-5) For error correction, the conventional computer performs a controlled-NOT gate 1308 for qubits 13, 16, 2, and 6 as control bits and qubits 4, 8, 9, and 11 as target bits at stage 11.

(13-6) For error correction, the conventional computer performs a Hadamard gate 1309 for the qubits 13 and 16 at stage 12.

(13-7) For error correction, the conventional computer performs a Z measurement 1310 for qubits 9, 11, 13, and 16 at stage 13. This allows the conventional computer to generate logical Bell states of the logical qubits 1110 and 1120 and to perform error correction.

(Conventional Process Procedure)

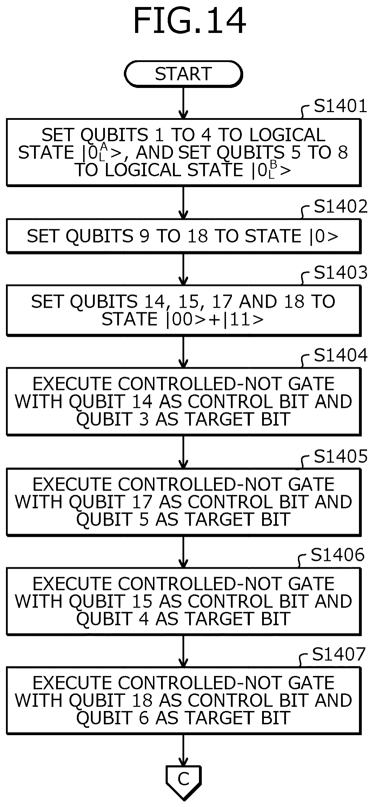

An example of a conventional process procedure executed by a conventional computer will then be described with reference to Figs. 14 to 16.

Figs. 14, 15, and 16 are flowcharts depicting an example of a conventional process procedure. In Fig. 14, the conventional computer sets the qubits 1 to 4 to the logical state $|0_L^A>$, and sets the qubits 5 to 8 to the logical state $|0_L^B>$ (step S1401).

The conventional computer sets the qubits 9 to 18 to the state $|0>$ (step S1402). The conventional computer executes quantum state transfer to set qubits 14 and 17 and qubits 15 and 18 to the state $|00>+|11>$ (step S1403).

The conventional computer executes a controlled-NOT gate with qubit 14 as the control bit and qubit 3 as the target bit (step S1404). The conventional computer executes a controlled-NOT gate with the qubit 17 as the control bit and the qubit 5 as the target bit (step S1405).

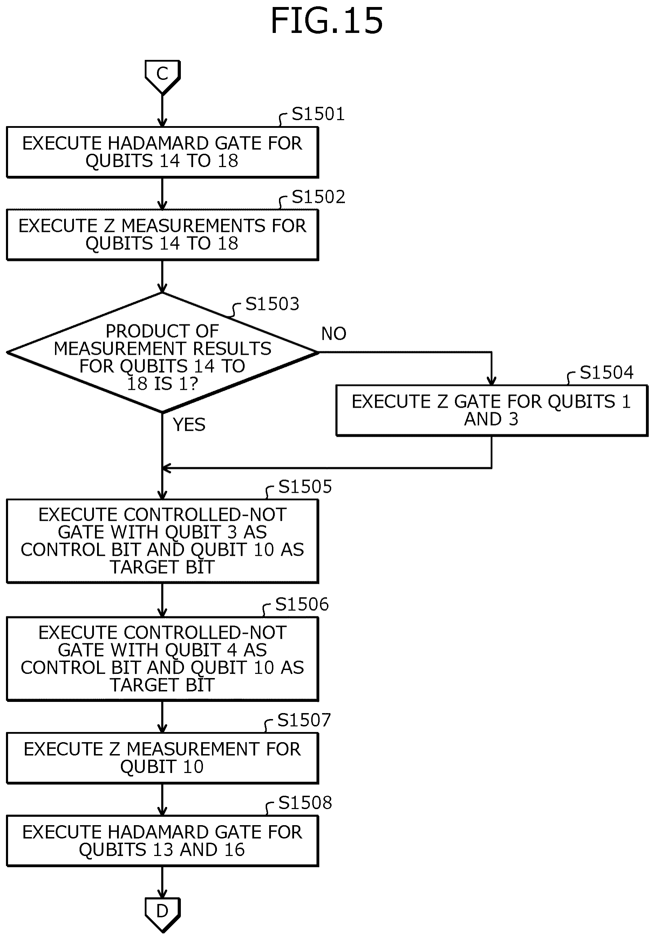

The conventional computer executes a controlled-NOT gate with the qubit 15 as the control bit and the qubit 4 as the target bit (step S1406). The conventional computer executes a controlled-NOT gate with the qubit 18 as the control bit and the qubit 6 as the target bit (step S1407). The conventional computer proceeds to the process of step S1501 described later in Fig. 15.

In Fig. 15, the conventional computer executes a Hadamard gate with the qubits 14 to 18 (step S1501). The conventional computer executes Z measurements with the qubits 14 to 18 (step S1502).

The conventional computer determines whether the product of the measurement results of the qubits 14 to 18 is 1 or not (step S1503). Here, when the product of the measurement results of the qubits 14 to 18 is not 1 (step S1503: NO), the conventional computer executes a Z gate for the qubits 1 and 3 (step S1504) and proceeds to the process of step S1505. On the other hand, when the product of the measurement results of the qubits 14 to 18 is 1 (step S1503: YES), the conventional computer proceeds to the process of step S1505.

At step S1505, the conventional computer executes a controlled-NOT gate with the qubit 3 as the control bit and the qubit 10 as the target bit (step S1505). The conventional computer executes a controlled-NOT gate with the qubit 4 as the control bit and the qubit 10 as the target bit (step S1506).

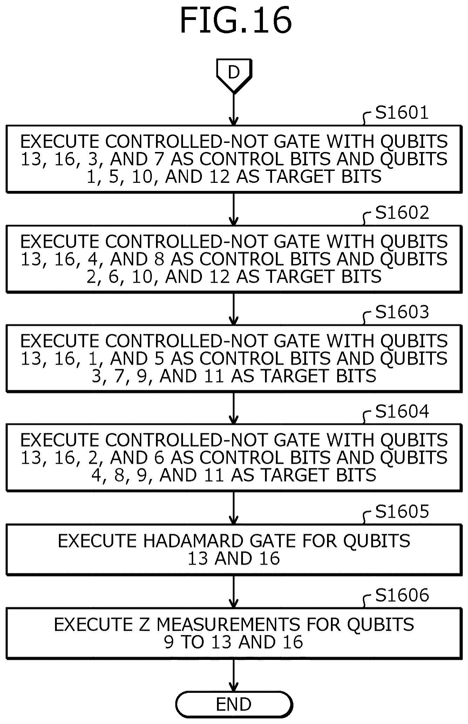

The conventional computer executes a Z measurement for the qubit 10 (step S1507). The conventional computer executes a Hadamard gate for the qubits 13 and 16 (step S1508). The conventional computer proceeds to the process of step S1601, which will be described later with reference to Fig. 16.

In Fig. 16, the conventional computer executes a controlled-NOT gate with the qubits 13, 16, 3, and 7 as control bits and the qubits 1, 5, 10, and 12 as target bits (step S1601).

The conventional computer executes a controlled-NOT gate with the qubits 13, 16, 4, and 8 as control bits and the qubits 2, 6, 10, and 12 as target bits (step S1602). The conventional computer executes a controlled-NOT gate with the qubits 13, 16, 1, and 5 as control bits and the qubits 3, 7, 9, and 11 as target bits (step S1603).

The conventional computer executes a controlled-NOT gate with the qubits 13, 16, 2, and 6 as control bits and the qubits 4, 8, 9, and 11 as target bits (step S1604). The conventional computer executes a Hadamard gate for the qubits 13 and 16 (step S1605). The conventional computer executes Z measurements for qubits 9 to 13 and 16 (step S1606). Then, the conventional computer ends the conventional processing. As a result, the conventional computer may generate the logical state $|0_L^A>|0_L^B>+|1_L^A>|1_L^B>$.

As depicted in Figs. 4 to 10, if the information processing device 100 executes the merge processing of steps S601 to S608 and S701 to S704, it may generate the logical Bell state of the logical qubits 410 and 420 without executing the splitting. On the other hand, as depicted in Figs. 11 to 16, in the conventional method, after executing the merge processing of steps S1401 to S1407 and S1501 to S1503, the splitting of steps S1504 to S1507 is executed. As described, the information processing device 100 may reduce the processing time required to generate the logical Bell states of logical qubits 410 and 420, as compared to the conventional method.

As depicted in Figs. 4 to 10, the information processing device 100 may generate the logical Bell states of logical qubits 410 and 420 and perform error correction. The information processing device 100 may generate the logical Bell states of logical qubits 410 and 420 and perform error correction, for example, at steps S901 to S909 and S1001 to S1009.

On the other hand, as depicted in Figs. 11 to 16, in the conventional method, error correction is performed after generating the logical Bell states of the logical qubits 1110 and 1120. In the conventional method, for example, after generating the logical Bell states of logical qubits 1110 and 1120 at steps S1401 to S1407 and S1501 to S1507, error correction is performed at steps S1508 and S1601 to S1606.

As described, the information processing device 100 may reduce the time required to start performing error correction compared to the conventional method. The information processing device 100 may reduce the time required to complete error correction after starting to generate the logical Bell states of the logical qubits 410 and 420 compared to the conventional method.

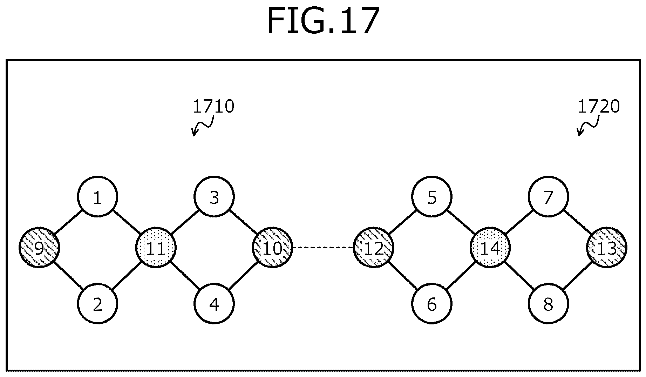

An example of the fidelity of the measurement result of the data qubit in the information processing device 100 will then be described with reference to Figs. 17 to 21. For example, an example of the fidelity of the measurement result of the data qubit will be described for the case where the information processing device 100 generates the logical Bell states of logical qubits 1710 and 1720 depicted in Fig. 17 and performs error correction.

Figs. 17, 18, 19, 20, and 21 are explanatory diagrams depicting an example of the fidelity of the measurement result of a data qubit. Fig. 17 for example depicts an example of an arrangement of multiple qubits in the logical qubits 1710 and 1720 that are targets for generating a logical Bell state.

As depicted in Fig. 17, the logical qubit 1710 for example includes the four data qubits 1 to 4 arranged in a matrix of two rows and two columns. The logical qubit 1710 for example includes an ancilla qubit 9 for error correction Z measurement that is coupled to the data qubits 1 and 2. The logical qubit 1710 for example includes an ancilla qubit 10 for error correction Z measurement and for merging that is coupled to data qubits 3 and 4. The logical qubit 1710 for example includes an ancilla qubit 11 for error correction X measurement that is coupled to the data qubits 1 to 4.

As depicted in Fig. 17, the logical qubit 1720 for example includes four data qubits 5 to 8 arranged in a matrix of two rows and two columns. The logical qubit 1720 for example includes an ancilla qubit 13 for error correction Z measurement, which is coupled to the data qubits 7 and 8. The logical qubit 1720 for example includes an ancilla qubit 12 for error correction Z measurement and merging, which is coupled to the data qubits 5 and 6. The logical qubit 1720 for example includes an ancilla qubit 14 for error correction X measurement, which is coupled to the data qubits 5 to 8.

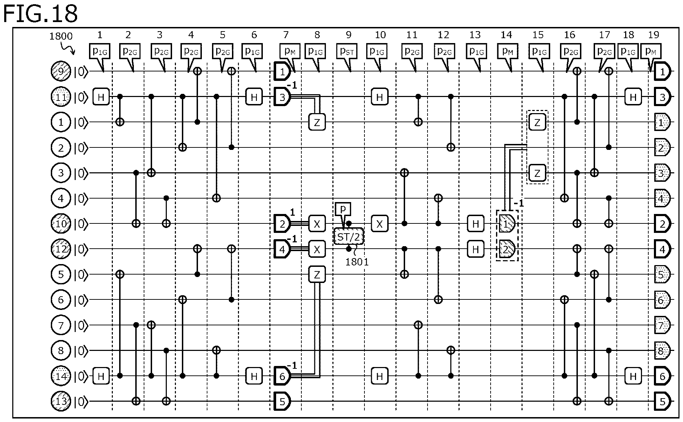

The arrangement of the multiple qubits in the logical qubits 1710 and 1720 is determined so as to minimize the number of pairs of ancilla qubits that directly entangle. For example, in the example of Fig. 17, the pair of ancilla qubits that entangle is one of the pairs of ancilla qubits 10 and 12. Next, we move on to the explanation of Fig. 18.

Fig. 18 depicts a quantum circuit 1800 in which the information processing device 100 generates logical Bell states of the logical qubits 1710 and 1720 and performs error correction. In Fig. 18, each horizontal line of the quantum circuit 1800 is a time axis corresponding to one of the qubits.

The information processing device 100 performs multiple quantum operations for the qubits 1 to 14 in stages. For example, two or more quantum operations belonging to the same stage are performed in parallel. The thick lines in Fig. 18 represent quantum operations to be performed for error correction among the multiple quantum operations. The information processing device 100 obtains measurement results of data qubits 1 to 8 by performing a simulation plural times in which multiple quantum operations are performed for the qubits 1 to 14 in stages according to the quantum circuit 1800.

In the simulation, for example, the processing time of the One-qubit gate is assumed to be 5 ns. In the simulation, for example, the processing time of the Two-qubit gate is assumed to be 20 ns. In the simulation, for example, the processing time of the Measurement is assumed to be 35 ns. In the simulation, for example, the processing time of a state transfer is assumed to be 60 ns.

Here, qubits have the property that errors occur probabilistically. For example, at each stage of performing a quantum operation, an error occurs in the qubit with probability $p_{1G}$, $p_{2G}$, or $p_M$. Also, every time ancilla qubits for merge processing are entangled with each other, an error occurs in the qubit with a probability p. For example, in a quantum operation 1801 in Fig. 18, an error occurs in the qubit with a probability p.

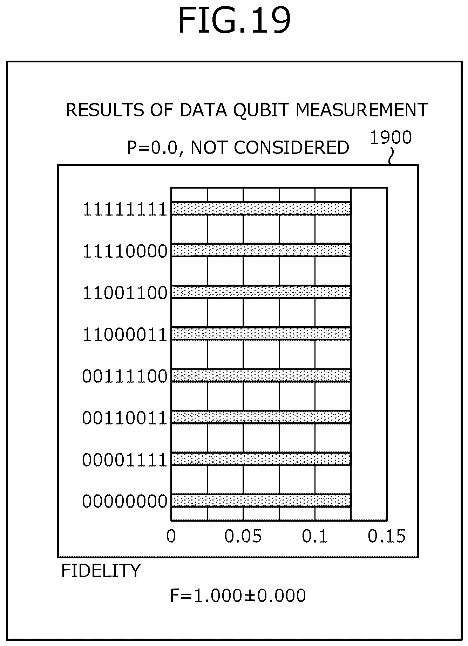

Here, first, moving to the explanation of Fig. 19, an example of the fidelity of the measurement results of data qubits 1 to 8 when the information processing device 100 performs simulation 10,000 times with p=0.0 and without considering probabilities $p_{1G}$, $p_{2G}$, and $p_M$ will be explained.

Table 1900 in Fig. 19 depicts multiple values that are the measurement results of the data qubits 1 to 8, and the frequency with which the measurement results of data qubits 1 to 8 become each value. The multiple values are, for example, 11111111, 11110000, 11001100, 11000011, 00111100, 00110011, 00001111, and 00000000. The values 11111111, 11110000, 11001100, 11000011, 00111100, 00110011, 00001111, and 00000000 are values in which no errors appear.

As depicted in Table 1900, no errors appear in the measurement results of the data qubits 1 to 8, and the fidelity F is 1.000±0.000.

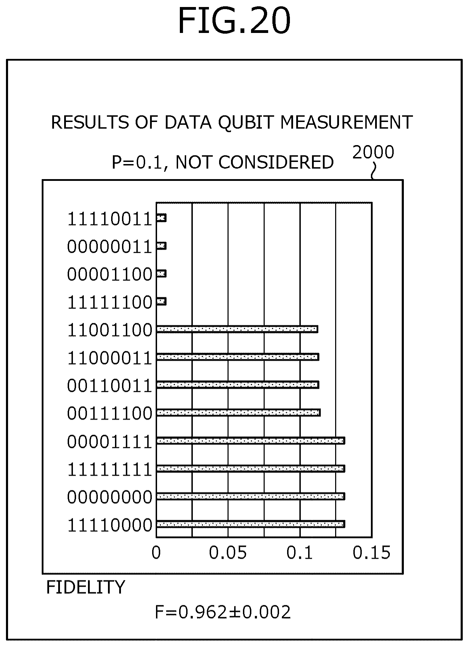

Next, moving on to the explanation of Fig. 20, an example of the fidelity of the measurement results of data qubits 1 to 8 when p=0.1 and the information processing device 100 performs a simulation 10,000 times without considering probabilities $p_{1G}$, $p_{2G}$, and $p_M$ will be explained.

Table 2000 of Fig. 20 depicts multiple values that are measurement results of the data qubits 1 to 8, and the frequency with which each value is the measurement result of the data qubits 1 to 8. The number of values includes, for example, 11111111, 11110000, 11001100, 11000011, 00111100, 00110011, 00001111, and 00000000. 11111111, 11110000, 11001100, 11000011, 00111100, 00110011, 00001111, and 00000000 are values in which no errors occur.

The multiple values include, for example, 11110011, 00000011, 00001100, and 11111100. 11110011, 00000011, 00001100, and 11111100 are values in which an error occurs.

As depicted in Table 2000, an error may occur in the measurement results of the data qubits 1 to 8. The fidelity F is 0.962±0.002.

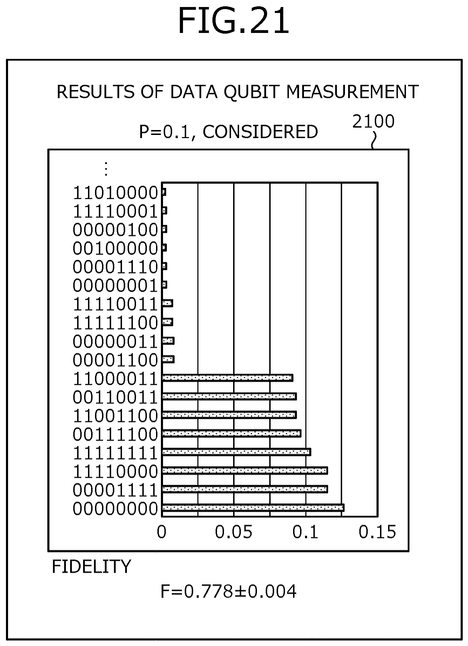

Next, moving on to the explanation of Fig. 21, an example of the fidelity of the measurement results of the data qubits 1 to 8 when p=0.1, and the probabilities $p_{1G}$, $p_{2G}$, and $p_M$ are considered and the information processing device 100 performs simulation 10,000 times will be explained.

Table 2100 of Fig. 21 depicts multiple values that are measurement results for the data qubits 1 to 8, and the frequency with which each value results in a measurement of the data qubits 1 to 8. The number of values includes, for example, 11111111, 11110000, 11001100, 11000011, 00111100, 00110011, 00001111, and 00000000. 11111111, 11110000, 11001100, 11000011, 00111100, 00110011, 00001111, and 00000000 are values in which no errors occur.

The multiple values include, for example, 11010000, 11110001, 00000100, 00100000, 00001110, 00000001, 11110011, and 11111100. 11010000, 11110001, 00000100, 00100000, 00001110, 00000001, 11110011, and 11111100 are values in which errors appear.

As depicted in Table 2100, errors may appear in the measurement results of the data qubits 1 to 8. The fidelity F is $0.778 \pm 0.004$.

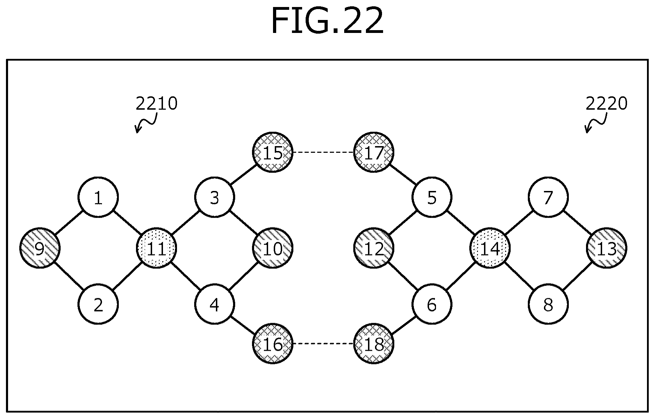

An example of the accuracy F (fidelity) of the measurement result of a data qubit in the conventional method will then be described with reference to Figs. 22 to 28. For example, an example of the fidelity of the measurement result of a data qubit is depicted when a conventional computer generates the logical Bell states of logical qubits 2210 and 2220 depicted in Fig. 22 and performs error correction.

Figs. 22, 23, 24, 25, 26, 27, and 28 are explanatory diagrams depicting an example of the fidelity of the measurement result of a data qubit. For example, Fig. 22 depicts an example of an arrangement of multiple qubits in the logical qubits 2210 and 2220 for which a logical Bell state is to be generated.

As depicted in Fig. 22, the logical qubit 2210 for example includes the four data qubits 1 to 4 arranged in a matrix of two rows and two columns. The logical qubit 2210 for example includes ancilla qubit 9 for error correction Z measurement and coupled to the data qubits 1 and 2. The logical qubit 2210 for example includes ancilla qubits 15 and 16 for error correction Z measurement and coupled to data qubits 3 and 4. The logical qubit 2210 for example includes an ancilla qubit 10 for a merge process that is coupled to the data qubits 3 and 4. The logical qubit 2210 for example includes an ancilla qubit 11 for error correction X measurement that is coupled to the data qubits 1 to 4.

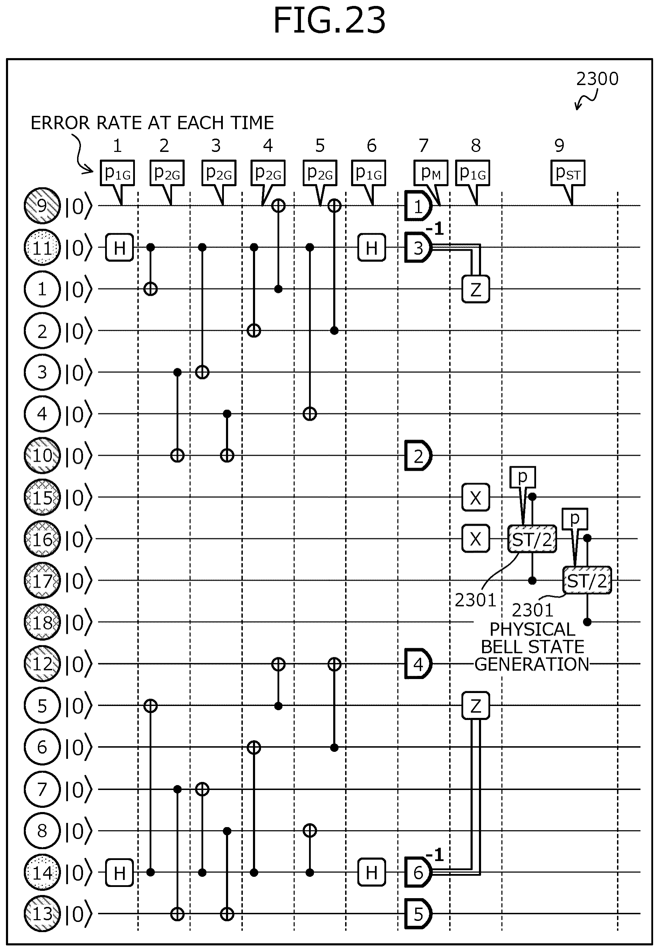

As depicted in Fig. 22, the logical qubit 2220 for example includes four data qubits 5 to 8 arranged in a matrix of two rows and two columns. The logical qubit 2220 for example includes an ancilla qubit 13 for error correction Z measurement that is coupled to the data qubits 7 and 8. The logical qubit 2220 for example includes ancilla qubits 17 and 18 for error correction Z measurement that are coupled to the data qubits 5 and 6. The logical qubit 2220 for example includes an ancilla qubit 12 for a merge process. The logical qubit 2220 for example includes an ancilla qubit 14 for error correction X measurement that is coupled to the data qubits 5 to 8. Next, we move on to the description of Figs. 23 to 25.

Figs. 23, 24, and 25 depict quantum circuit 2300 in which a conventional computer generates logical Bell states of the logical qubits 2210 and 2220 and performs error correction. In Fig. 23, each horizontal line in quantum circuit 2300 is a time axis corresponding to one of the qubits.

A conventional computer performs multiple quantum operations for qubits 1 to 14 in stages. For example, two or more quantum operations belonging to the same stage are performed in parallel. The thick lines in Figs. 23 to 25 represent quantum operations to be performed for error correction among the multiple quantum operations. A conventional computer obtains measurement results of the data qubits 1 to 8 by performing a simulation plural times in which multiple quantum operations are performed for qubits 1 to 14 in stages according to a quantum circuit 2300.

Here, as described above, qubits have the property that errors occur probabilistically. For example, at each stage in which a quantum operation is performed, an error occurs in the qubit with a probability $p_{1G}$, a probability $p_{2G}$, or a probability $p_M$. In addition, every time ancilla qubits for merge processing are entangled, an error occurs in the qubit with a probability p. For example, in quantum operations 2301 and 2302 in Fig. 23, an error occurs in the qubit with a probability p.

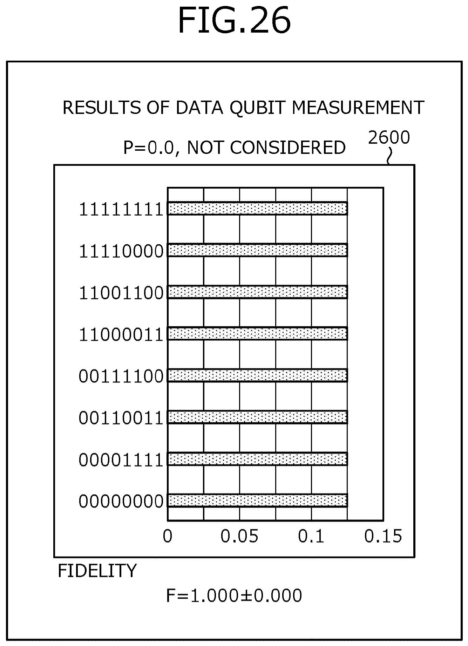

Here, first, moving to the explanation of Fig. 26, an example of the fidelity of the measurement results of the data qubits 1 to 8 when p=0.0 and a conventional computer performs a simulation 10,000 times without considering probabilities $p_{1G}$, $p_{2G}$, and $p_M$ will be explained.

Table 2600 in Fig. 26 depicts multiple values that are the measurement results of the data qubits 1 to 8 and the frequency with which the measurement results of the data qubits 1 to 8 become each value. The multiple values are, for example, 11111111, 11110000, 11001100, 11000011, 00111100, 00110011, 00001111, and 00000000. 11111111, 11110000, 11001100, 11000011, 00111100, 00110011, 00001111, and 00000000 are values in which no error occurs.

As depicted in Table 2600, no error occurs in the measurement results of the data qubits 1 to 8, and the fidelity F is $1.000 \pm 0.000$.

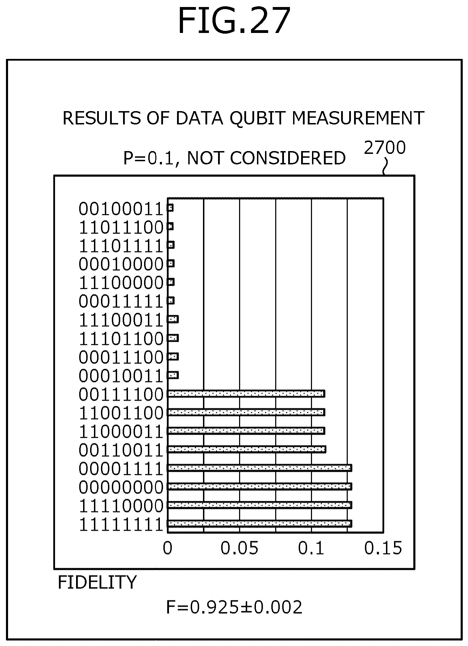

Next, moving to the explanation of Fig. 27, an example of the fidelity of the measurement results of the data qubits 1 to 8 when a conventional computer performs a simulation 10,000 times with p=0.1 and without considering probabilities $p_{1G}$, $p_{2G}$, and $p_M$ will be explained.

Table 2700 of Fig. 27 depicts multiple values that are the measurement results of the data qubits 1 to 8, and the frequency with which the measurement results of the data qubits 1 to 8 become each value. The number of values includes, for example, 11111111, 11110000, 11001100, 11000011, 00111100, 00110011, 00001111, and 00000000. The following values are error-free: 11111111, 11110000, 11001100, 11000011, 00111100, 00110011, 00001111, and 00000000.

Examples of the multiple values include: 00100011, 11011100, 11101111, 00010000, 11100000, 00011111, 11100011, 11101100, 00011100, and 00010011. 00100011, 11011100, 11101111, 00010000, 11100000, 00011111, 11100011, 11101100, 00011100, and 00010011 are values in which an error appears.

As depicted in Table 2700, an error may appear in the measurement results of the data qubits 1 to 8. The fidelity F is $0.925 \pm 0.002$.

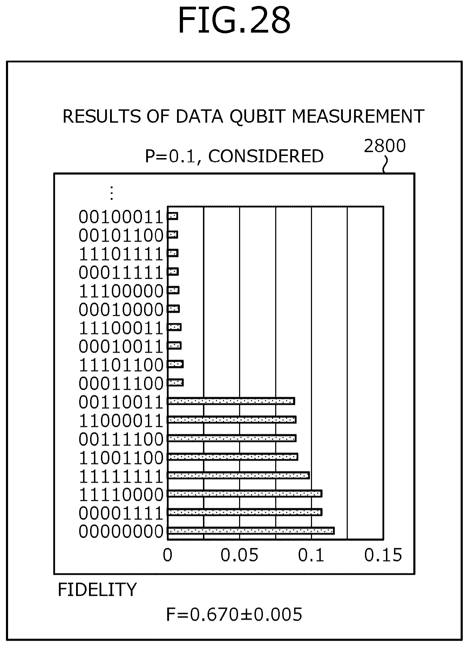

Next, moving on to the explanation of Fig. 28, an example of the fidelity of the measurement results of the data qubits 1 to 8 when a conventional computer performs a simulation 10,000 times, taking into account probabilities $p_{1G}$, $p_{2G}$, and $p_M$ with p=0.1 will be explained.

Table 2800 in Fig. 28 depicts multiple values that are measurement results of the data qubits 1 to 8, and the frequency with which each value is the measurement result of the data qubits 1 to 8. The number of values includes, for example, 11111111, 11110000, 11001100, 11000011, 00111100, 00110011, 00001111, and 00000000. 11111111, 11110000, 11001100, 11000011, 00111100, 00110011, 00001111, and 00000000 are values in which no errors occur.

The multiple values include, for example, 00100011, 00101100, 11101111, 00011111, 11100000, 00010000, 11100011, 00010011, 11101100, and 00011100. 00100011, 00101100, 11101111, 00011111, 11100000, 00010000, 11100011, 00010011, 11101100, and 00011100 are values in which an error occurred.

As depicted in Table 2800, errors may appear in the measurement results of the data qubits 1 to 8. The fidelity F is $0.670\pm0.005$.

As depicted in Figs. 17 to 21, the information processing device 100 may reduce the number of pairs of ancilla qubits that are directly entangled, and may reduce the number of quantum operations that entangle ancilla qubits. Therefore, the information processing device 100 may reduce the number of times that an error may occur in a qubit with a probability p. The information processing device 100 may easily suppress a situation in which an error occurs in the measurement results of the data qubits 1 to 8 due to a quantum operation that entangles ancilla qubits.

The information processing device 100 may reduce the splitting, generate the logical Bell state of the logical qubits 410 and 420, and perform error correction, thereby reducing the processing time. Therefore, the information processing device 100 may reduce the number of stages in which quantum operations are performed. The information processing device 100 may reduce the number of times that an error may occur in a qubit with a probability $p_{1G}$, a probability $p_{2G}$, or a probability $p_M$. The information processing device 100 may easily suppress a situation in which an error occurs in the measurement results of the data qubits 1 to 8 due to a long processing time. The information processing device 100 may reduce the number of gates forming a quantum circuit. The information processing device 100 may easily avoid the occurrence of error propagation.

On the other hand, as depicted in Figs. 22 to 28, in the conventional method, the number of pairs of ancilla qubits that are directly entangled is two. Therefore, in the conventional method, it is difficult to suppress a situation in which an error occurs in the measurement results of the data qubits 1 to 8 due to a quantum operation that entangles the ancilla qubits.

In the conventional method, since error correction is performed after generating the logical Bell states of the logical qubits 410 and 420, there is a problem that the processing time tends to increase. Therefore, in the conventional method, it is difficult to prevent the occurrence of errors in the measurement results of the data qubits 1 to 8 due to the long processing time.

As described, compared to the conventional method, the information processing device 100 may easily avoid the occurrence of errors in the measurement results of the data qubits 1 to 8. As depicted in Tables 1900, 2000, and 2100 and Tables 2600, 2700, and 2800, the information processing device 100 may improve the fidelity F compared to the conventional method.

In the above, a case has been described in which the information processing device 100 generates logical Bell states of two logical qubits, each of which includes four data qubits arranged in a matrix of two rows and two columns, but this is not limited thereto. For example, the information processing device 100 may generate logical Bell states of two logical qubits each including $N^2$ data qubits arranged in a matrix of N rows and N columns.

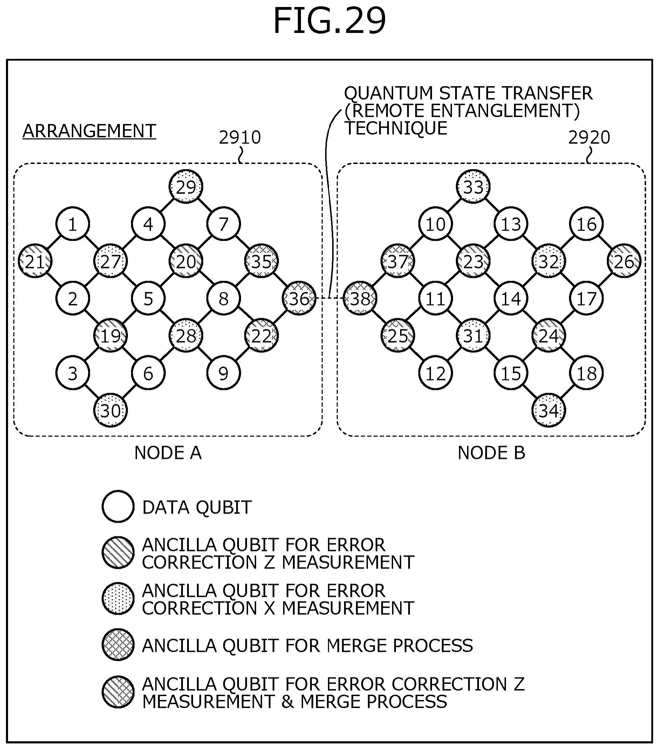

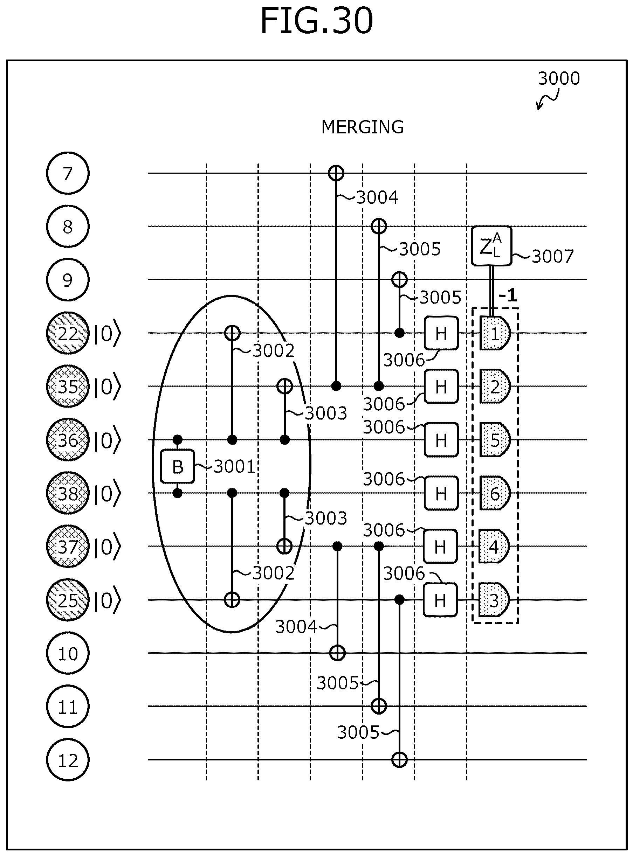

An example of generating logical Bell states of logical qubits 2910 and 2920 each including nine data qubits arranged in a matrix of 3 rows and 3 columns will then be described with reference to Figs. 29 and 30.

Figs. 29 and 30 are explanatory diagrams depicting an example of generating logical Bell states of the logical qubits 2910 and 2920. Fig. 29 for example depicts an example of an arrangement of multiple qubits in the logical qubits 2910 and 2920 for which a logical Bell state is to be generated.

As depicted in Fig. 29, the logical qubit 2910 is present, for example, at node A. The logical qubit 2910 for example includes nine data qubits 1 to 9 arranged in a matrix of 3 rows and 3 columns. The logical qubit 2910 for example includes an ancilla qubit 19 for error correction Z measurement and coupled to data qubits 2, 3, 5, and 6. The logical qubit 2910 for example includes an ancilla qubit 20 for error correction Z measurement and coupled to data qubits 4, 5, 7, and 8. The logical qubit 2910 for example includes an ancilla qubit 21 for error correction Z measurement and coupled to the data qubits 1 and 2.

The logical qubit 2910 for example includes an ancilla qubit 22 for error correction Z measurement and merging coupled to data qubits 8 and 9. The logical qubit 2910 for example includes an ancilla qubit 27 for error correction X measurement coupled to the data qubits 1, 2, 4, and 5. The logical qubit 2910 for example includes an ancilla qubit 28 for error correction X measurement coupled to data qubits 5, 6, 8, and 9. The logical qubit 2910 for example includes an ancilla qubit 29 for error correction X measurement coupled to data qubits 4 and 7. The logical qubit 2910 for example includes an ancilla qubit 30 for error correction X measurement coupled to the data qubits 3 and 6.

The logical qubit 2910 for example includes an ancilla qubit 35 for merging coupled to data qubits 7 and 8. The logical qubit 2910 for example includes an ancilla qubit 36 for merging coupled to ancilla qubits 22 and 35. As described, the arrangement of multiple qubits in the logical qubit 2910 is determined so as to minimize the number of pairs of ancilla qubits that directly entangle.

As depicted in Fig. 29, the logical qubit 2920 is present, for example, in node B. The logical qubit 2920 for example includes nine data qubits 10 to 18 arranged in a matrix of three rows and three columns. The logical qubit 2920 for example includes an ancilla qubit 24 for error correction Z measurement and coupled to data qubits 14, 15, 17, and 18. The logical qubit 2920 for example includes an ancilla qubit 23 for error correction Z measurement and coupled to data qubits 10, 11, 13, and 14. The logical qubit 2920 for example includes an ancilla qubit 21 for error correction Z measurement and coupled to data qubits 16 and 17.

The logical qubit 2920 for example includes an ancilla qubit 25 for error correction Z measurement and merging coupled to data qubits 11 and 12. The logical qubit 2920 for example includes an ancilla qubit 32 for error correction X measurement coupled to data qubits 13, 14, 16, and 17. The logical qubit 2920 for example includes an ancilla qubit 31 for error correction X measurement coupled to data qubits 11, 12, 14, and 15. The logical qubit 2920 for example includes an ancilla qubit 33 for error correction X measurement that connects to the data qubits 10 and 13. The logical qubit 2920 for example includes an ancilla qubit 34 for error correction X measurement that connects to the data qubits 15 and 18.

The logical qubit 2920 for example includes an ancilla qubit 37 for merging that connects to the data qubits 10 and 11. The logical qubit 2920 for example includes an ancilla qubit 38 for merging that connects to the ancilla qubits 25 and 37. As described, the arrangement of the multiple qubits in the logical qubit 2920 is determined so as to minimize the number of pairs of ancilla qubits that directly entangle. For example, in the example of Fig. 29, the pair of ancilla qubits that entangle is one of the pairs of ancilla qubits 36 and 38. Next, we move on to the description of Fig. 30.

Fig. 30 depicts a quantum circuit 3000 that generates logical Bell states of the logical qubits 2910 and 2920. In Fig. 30, each horizontal line of quantum circuit 3000 is a time axis corresponding to one of the qubits. In the example of Fig. 30, for example, qubits 7 to 12, 22, 25, and 35 to 38 of the logical qubits 2910 and 2920 are depicted.

The qubits 22, 25, and 35 to 38 are each in the state $|0\rangle$. The information processing device 100 executes quantum state transfer 3001 that sets qubits 36 and 38 to the state $|00\rangle+|11\rangle$. This allows information processing device 100 to entangle qubits 36 and 38.

The information processing device 100 executes a controlled-NOT gate 3002 with qubit 36 as a control bit and qubit 22 as a target bit. The information processing device 100 executes the controlled-NOT gate 3002 with the qubit 38 as the control bit and the qubit 25 as the target bit.

The information processing device 100 executes a controlled-NOT gate 3003 with the qubit 36 as the control bit and the qubit 35 as the target bit. The information processing device 100 executes the controlled-NOT gate 3003 with the qubit 38 as the control bit and the qubit 37 as the target bit.

The information processing device 100 executes a controlled-NOT gate 3004 with the qubit 35 as the control bit and the qubit 7 as the target bit. The information processing device 100 executes the controlled-NOT gate 3004 with the qubit 37 as the control bit and the qubit 10 as the target bit.

The information processing device 100 executes a controlled-NOT gate 3005 with the qubit 35 as the control bit and the qubit 8 as the target bit. The information processing device 100 executes the controlled-NOT gate 3005 with the qubit 37 as the control bit and the qubit 11 as the target bit. The information processing device 100 executes the controlled-NOT gate 3005 with the qubit 22 as the control bit and the qubit 9 as the target bit. The information processing device 100 executes the controlled-NOT gate 3005 with the qubit 25 as the control bit and the qubit 12 as the target bit.

The information processing device 100 executes a Hadamard gate 3006 for the qubits 22, 25, 35 to 38. If the product of the measurement results of the qubits 22, 25, 35 to 38 is 1, the information processing device 100 executes a logical Z gate 3007.

This allows the information processing device 100 to generate the logical Bell states of the logical qubits 2910 and 2920 without performing splitting. For example, the information processing device 100 may set the qubits 1 to 8 to a logical Bell state $|\Phi_L^+\rangle=|0_L^A\rangle|0_L^B\rangle+|1_L^A\rangle|1_L^B\rangle$. Thus, the information processing device 100 may reduce the processing time required to generate the logical Bell states of the logical qubits 2910 and 2920.

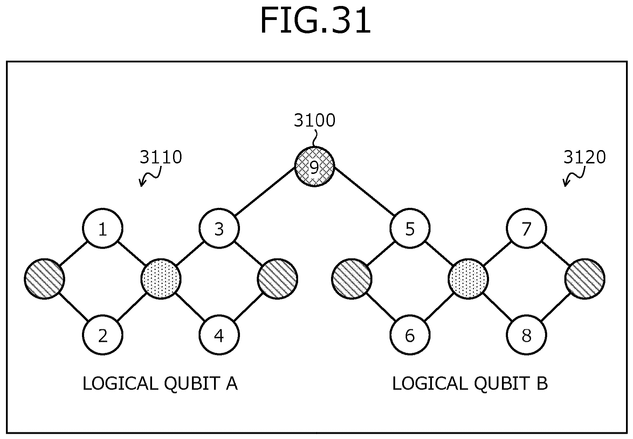

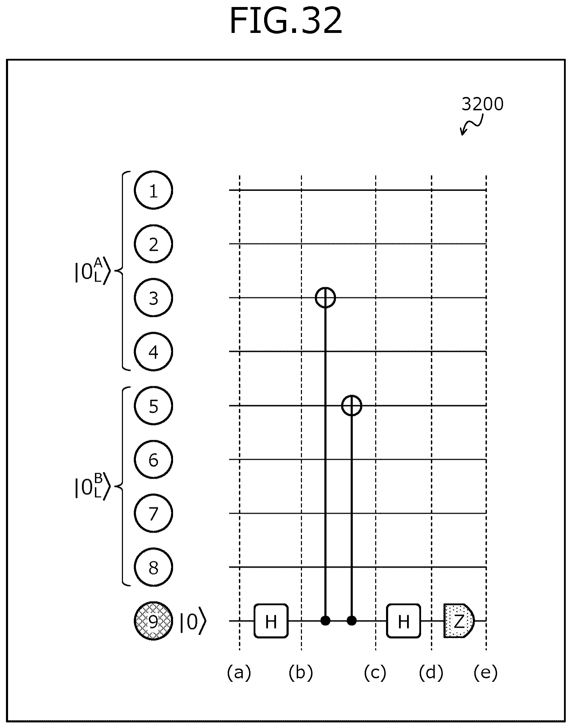

The reason why the information processing device 100 does not need to perform the splitting will then be described with reference to Figs. 31 to 34. For example, first, the reason why the splitting is performed by the conventional method will be described with reference to Figs. 31 and 32.

Figs. 31 and 32 are explanatory diagrams depicting a reason why the splitting is performed. In the example of Fig. 31, for the sake of simplicity, a case will be described in which logical qubits 3110 and 3120 are merged with the qubit 9 by the conventional method.

As depicted in Fig. 31, in the logical qubit 3110, an unentangled ancilla qubit is present closer to the logical qubit 3120 than the data qubits 1 to 4. Similarly, in the logical qubit 3120, an unentangled ancilla qubit is closer to the logical qubit 3110 than are data qubits 5 to 8. Thus, in the logical qubits 3110 and 3120, an unentangled ancilla qubit is present between data qubits 3 and 4 and data qubits 5 and 6.

The logical state of the logical qubit 3110 is $|0\rangle$: $|0_L^A\rangle=|0000\rangle+|1111\rangle$. The logical state of the logical qubit 3110 is $|$

1>:|1$_L^A$>=|0011>+|1100>. The logical state of the logical qubit 3120 is |0>:|0$_L^B$>=|0000>+|1111>. The logical state of the logical qubit 3120 is |1>:|1$_L^B$>=|0011>+|1100>. The error-corrected state is a state expressed by the sum of the products of the above logical states. For example, the error-corrected state is a state expressed by the following formula (1) or (2).

$$|0_L^B\rangle|0_L^A\rangle = (|0000\rangle+|1111\rangle) \otimes (|0000\rangle+|1111\rangle)$$

$$= |00000000\rangle + |00001111\rangle +|11110000\rangle +|11111111\rangle \quad ...(1)$$

$$|1_L^B\rangle|1_L^A\rangle = (|0011\rangle+|1100\rangle) \otimes (|0011\rangle+|1100\rangle)$$

$$= |00110011\rangle + |00111100\rangle +|11000011\rangle +|11001100\rangle \quad ...(2)$$

Next, we move on to the explanation of Fig. 32. Fig. 32 depicts a quantum circuit 3200 that generates the logical Bell states of the logical qubits 3110 and 3120. In Fig. 32, the changes in the quantum states of qubits 1 to 9 at each of points (a) to (e) represented by the dotted lines in quantum circuit 3200 will be explained.

At the point (a), the quantum states of qubits 1 to 9 are the quantum states expressed by the following formula (3). The upper digit of the quantum state corresponds to qubit 9.

$$|000000000\rangle + |000001111\rangle +|011110000\rangle +|011111111\rangle \quad ...(3)$$

At the point (b), the quantum states of qubits 1 to 9 are the quantum states expressed by the following formula (4).

$$|000000000\rangle + |000001111\rangle +|011110000\rangle +|011111111\rangle |100000000\rangle + |100001111\rangle +|111110000\rangle +|011111111\rangle \quad (4)$$

At the point (c), the quantum states of qubits 1 to 9 are the quantum states expressed by the following formula (5).

$$|000000000\rangle + |000001111\rangle +1011110000) +|011111111\rangle +|100010100\rangle +|100011011\rangle +|111100100\rangle +| 111101011\rangle \quad (5)$$

At the point (d), the quantum states of qubits 1 to 9 are the quantum states expressed by the following formula (6).

$$|000000000\rangle + |000001111\rangle +|011110000\rangle +|011111111\rangle +|100000000\rangle + |100001111\rangle +|111110000\rangle +| 111111111\rangle +|000010100\rangle + |000011011\rangle +|011100100\rangle +|011101011\rangle -|100010100\rangle - |100011011\rangle -| 111100100\rangle -1111101011\rangle \quad (6)$$

At the point (e), through observation, there is a 1/2 probability that the quantum states of qubits 1 to 9 are the quantum states expressed by the following formula (7).

$$|000000000\rangle + |000001111\rangle +|011110000\rangle +|011111111\rangle +|000010100\rangle + |000011011\rangle +|011100100\rangle +| 011101011\rangle \quad (7)$$

Thus, with the conventional method, the quantum state of the qubits 1 to 8 in the above formula (7) does not become an error-corrected state. In the conventional method, since there are unentangled ancilla qubits between the data qubits 3 and 4 and the data qubits 5 and 6 in the logical qubits 3110 and 3120, the quantum states of the qubits 1 to 8 are not error-corrected. Therefore, in the conventional method, a splitting is performed. In the conventional method, there is a problem that the processing time required to generate the logical Bell states of the logical qubits 3110 and 3120 increases.

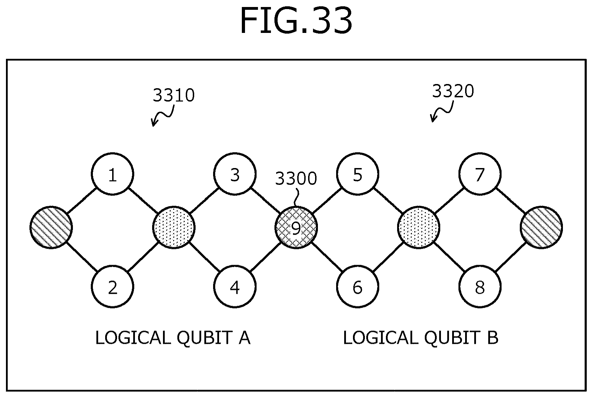

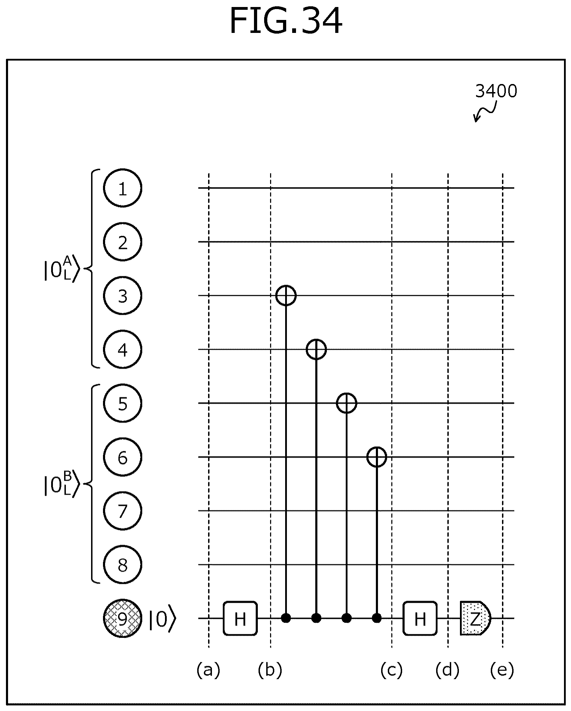

The reason why the information processing device 100 does not need to perform a splitting will then be described with reference to Figs. 33 and 34.

Figs. 33 and 34 are explanatory diagrams depicting a reason why the splitting does not need to be performed. In the example of Fig. 33, for the sake of simplicity, a case will be described in which the information processing device 100 performs a merge process on logical qubits 3310 and 3320 with the qubit 9.

As depicted in Fig. 33, in the logical qubit 3310, there is no unentangled ancilla qubit on the logical qubit 3320 side of the data qubits 1 to 4. Similarly, in the logical qubit 3320, there is no unentangled ancilla qubit on the logical qubit 3310 side of data qubits 5 to 8. Thus, in the logical qubits 3310 and 3320, there is no unentangled ancilla qubit between data qubits 3 and 4 and data qubits 5 and 6. Next, we move on to the explanation of Fig. 34.

Fig. 34 depicts quantum circuit 340 0 that generates logical Bell states of the logical qubits 3310 and 3320. In Fig. 34, the changes in the quantum states of qubits 1 to 9 at each point in time (a) to (e) represented by the dotted lines in quantum circuit 3400 will be explained.

At the point (a), the quantum state of qubits 1 to 9 is the quantum state expressed by the following formula (8). The upper digit of the quantum state corresponds to qubit 9.

$$|000000000\rangle + |000001111\rangle + |011110000\rangle + |011111111\rangle \quad ...(8)$$

At the point (b), the quantum state of qubits 1 to 9 is the quantum state expressed by the following formula (9).

$$|000000000\rangle + |000001111\rangle + |011110000\rangle + |011111111\rangle + |100000000\rangle + |100001111\rangle + |111110000\rangle + |111111111\rangle \qquad (9)$$

At the point (c), the quantum state of qubits 1 to 9 is the quantum state expressed by the following formula (10).

$$|000000000\rangle + |000001111\rangle + |011110000\rangle + |011111111\rangle + |100111100\rangle + |100110011\rangle + |111001100\rangle + |111001011\rangle \qquad (10)$$

At the point (d), the quantum state of qubits 1 to 9 is the quantum state expressed by the following formula (11).

$$|000000000\rangle + |000001111\rangle + |011110000\rangle + |011111111\rangle + |100000000\rangle + |100001111\rangle + |111110000\rangle + |111111111\rangle + |000111100\rangle + |000110011\rangle + |011001100\rangle + |011000011\rangle - |100111100\rangle - |100110011\rangle - |111001100\rangle - |111000011\rangle \qquad (11)$$

At the point (e), through observation, there is a 1/2 probability that the quantum states of qubits 1 to 9 are the quantum states expressed by the following formula (12).

$$|000000000\rangle + |000001111\rangle + |011110000\rangle + |011111111\rangle + |000111100\rangle + |000110011\rangle + |011001100\rangle + |011000011\rangle \qquad (12)$$

As described, the information processing device 100 may make the quantum states of the qubits 1 to 8 in the above formula (12) into an error-corrected state. The information processing device 100 may entangle all the ancilla qubits between the data qubits 3 and 4 and the data qubits 5 and 6, and may make the quantum states of the qubits 1 to 8 into an error-corrected state. Therefore, the information processing device 100 may eliminate performing a splitting. The information processing device 100 may reduce the processing time required to generate the logical Bell states of the logical qubits 3310 and 3320.

As set forth hereinabove, the information processing device 100 may generate the logical Bell states of the two logical qubits by entangling all the ancilla qubits between the two logical qubits without using the data qubits. This allows the information processing device 100 to avoid performing a splitting and may reduce the processing time required to generate the logical Bell states of the two logical qubits.

According to the information processing device 100, when generating a logical Bell state of two logical qubits, an ancilla qubit for error correction among multiple qubits in each logical qubit may be used to perform error correction of a data qubit. This allows the information processing device 100 to perform error correction while generating a logical Bell state of two logical qubits, and may reduce the time required to start performing error correction. The information processing device 100 may reduce the processing time required to complete the generation of the logical Bell state of two logical qubits and complete execution of error correction. The information processing device 100 may easily avoid an increase in the error occurrence rate that accompanies an increase in processing time.

According to the information processing device 100, a logical Bell state of two logical qubits in which multiple qubits are arranged may be generated so that the number of ancilla qubits to be entangled is minimized. The information processing device 100 may reduce the number of entanglements, and may reduce the processing time required to generate a logical Bell state of two logical qubits. The information processing device 100 may easily avoid an increase in the error rate associated with entanglement.

According to the information processing device 100, it is possible to generate a logical Bell state of two logical qubits in which one or more ancilla qubits serving as nodes are arranged in a binary tree pattern with two or more data qubits as leaves and one directly entangled ancilla qubit as the root. This allows the information processing device 100 to generate a logical Bell state of two logical qubits in which the number of entangled ancilla qubits is the minimum.

According to the information processing device 100, it is possible to generate a logical Bell state of two logical qubits in which four data qubits are arranged in a matrix pattern of two rows and two columns, and one ancilla qubit directly coupled to the two data qubits is arranged. This allows the information processing device 100 to generate a logical Bell state of two logical qubits in which the number of entangled ancilla qubits is the minimum.

According to the information processing device 100, it is possible to generate a logical Bell state of two logical qubits in which nine data qubits are arranged in a matrix of three rows and three columns. Each logical qubit has three data qubits arranged on the side coupled to the other logical qubit as leaves, and three ancilla qubits as nodes are arranged in a binary tree pattern with one ancilla qubit that is directly entangled as the root. This allows the information processing device 100 to generate a logical Bell state of two logical qubits in which the number of ancilla qubits to be entangled is the minimum.

The information processing method described in this embodiment may be implemented by executing a program prepared in advance on a computer such as a PC or a workstation. The information processing program described in this embodiment is recorded on a computer-readable recording medium and executed by being read from the recording medium by the computer. The recording medium may be a hard disk, a flexible disk, a compact disc (CD)-ROM, a magneto optical disc (MO), a digital versatile disc (DVD), etc. The information processing program described in the present embodiment may be distributed via a network such as the Internet.

EXPLANATIONS OF LETTERS OR NUMERALS

1 to 8, 10 to 18, 22, 25, 35 to 38 qubits
100 information processing device
110 first logical qubit
120 second logical qubit
200 bus
201 CPU
202 memory
203 network I/F
204 recording medium I/F
205 recording medium
206 computing device I/F
207 quantum computing device
210 network
300 storge unit
301 obtaining unit
302 computing unit
303 operating unit
304 output unit
410, 420, 1110, 1120, 1710, 1720, 2210, 2220, 2910, 2920, 3110, 3120, 3310, 3320 logical qubits
500, 800, 1200, 1800, 2300, 3000, 3200, 3400 quantum circuit
501, 802, 1201, 3001 quantum state transfer
502, 503, 505, 506, 803 to 807, 810 to 812, 1202, 1206, 1207, 1303, 1304, 1306, 1308, 3002 to 3005 controlled-NOT gate
504, 507, 801, 808, 813, 1203, 1302, 1309, 3006 Hadamard gate
508, 809, 814, 1204, 1301, 1307, 1310 Z measurement
509,1205 Z gate
3007 logical Z gate
1801, 2301, 2302 quantum operation
1900, 2000, 2100, 2600, 2700, 2800 Tables

**Claims**

1. An information processing program causing a computer to execute a process comprising:
generating a logical Bell state of two logical qubits that are to be coupled to each other, each of the two logical qubits having an arrangement of a plurality of qubits including a plurality of data qubits and a plurality of ancilla qubits, the logical Bell state being generated by entangling between the two logical qubits, all ancilla qubits that of the plurality of ancilla qubits of the each of the two logical qubits, are arranged closer to the other of the two logical qubits to be coupled thereto than is the plurality of data qubits thereof, the entangling being free of the plurality of data qubits.

2. The information processing program according to claim 1, wherein
the generating includes carrying out error correction of the plurality of data qubits by using among the plurality of qubits in the each of the two logical qubits, an ancilla qubit for error correction when generating the logical Bell state of the two logical qubits.

3. The information processing program according to claim 1 or 2, wherein
in the each of the two logical qubits, the plurality of qubits including the plurality of data qubits and the plurality of ancilla qubits is arranged so that the number of the ancilla qubits to be entangled is minimized.

4. The information processing program according to claim 3, wherein
in the each of the two logical qubits, one or more of the plurality of ancilla qubits is arranged as a node in a binary tree pattern including two or more of the data qubits arranged as leaves relatively closer to the other of the two logical qubits to be coupled thereto and one of the plurality of ancilla qubits directly entangled as a root.

5. The information processing program according to claim 4, wherein
in the each of the two logical qubits, the plurality of data qubits includes four arranged in a matrix of two rows and two columns, with one of the plurality of ancilla qubits directly coupled to two of the plurality of data qubits, arranged relatively closer to the other of the two logical qubits to be coupled thereto.

6. The information processing program according to claim 4, wherein
in the each of the two logical qubits, the plurality of data qubits includes nine arranged in a matrix of three rows and three columns, three of the plurality of ancilla qubits are arranged as nodes in a binary tree pattern including three of the plurality of data qubits arranged as leaves relatively closer to the other of the two logical qubits to be coupled thereto, and one of the plurality of ancilla qubits directly entangled as a root.

7. An information processing method executed by a computer, the information processing method comprising:
generating a logical Bell state of two logical qubits that are to be coupled to each other, each of the two logical qubits having an arrangement of a plurality of qubits including a plurality of data qubits and a plurality of ancilla qubits, the logical Bell state being generated by entangling between the two logical qubits, all ancilla qubits that of the plurality of ancilla qubits of the each of the two logical qubits, are arranged closer to the other of the two logical qubits to be coupled thereto than is the plurality of data qubits thereof, the entangling being free of the plurality of data qubits.

8. An information processing device, comprising a controller configured to:
generate a logical Bell state of two logical qubits that are to be coupled to each other, each of the two logical qubits having an arrangement of a plurality of qubits including a plurality of data qubits and a plurality of ancilla qubits, the logical Bell state being generated by entangling between the two logical qubits, all ancilla qubits that of the plurality of ancilla qubits of the each of the two logical qubits, are arranged closer to the other of the two logical qubits to be coupled thereto than is the plurality of data qubits thereof, the entangling being free of the plurality of data qubits.

# FIG.1

ARRANGEMENT
EXAMPLE                    110

ENTANGLED                    120

DATA QUBIT

ANCILLA QUBIT FOR ERROR
CORRECTION Z MEASUREMENT

ANCILLA QUBIT FOR ERROR
CORRECTION X MEASUREMENT

ANCILLA QUBIT FOR ERROR CORRECTION Z
MEASUREMENT & MERGING

ANOTHER ARRANGEMENT
EXAMPLE                    130                    140

# FIG.2

# FIG.3

300

**STORAGE UNIT**

100

301

**OBTAINING UNIT**

303

**OPERATING UNIT**

304

**OUTPUT UNIT**

302

**COMPUTING UNIT**

# FIG.4

QUANTUM STATE TRANSFER
(REMOTE ENTANGLEMENT)
TECHNIQUE

ARRANGEMENT  410  420

NODE A

NODE B

⬤ ANCILLA QUBIT FOR ERROR CORRECTION Z
MEASUREMENT & MERGE PROCESS

# FIG.5

# FIG.6

START

┌─ S601

SET QUBITS 1 TO 4 TO LOGICAL STATE $|0_L^A>$ AND QUBITS 5 TO 8 TO LOGICAL STATE $|0_L^B>$

┌─ S602

SET QUBITS 10 AND 11 TO STATE $|0>$

┌─ S603

SET QUBITS 10 AND 11 TO STATE $|00>+|11>$

┌─ S604

EXECUTE CONTROLLED-NOT GATE WITH QUBIT 10 AS CONTROL BIT AND QUBIT 3 AS TARGET BIT

┌─ S605

EXECUTE CONTROLLED-NOT GATE WITH QUBIT 10 AS CONTROL BIT AND QUBIT 4 AS TARGET BIT

┌─ S606

EXECUTE HADAMARD GATE FOR QUBIT 10

┌─ S607

EXECUTE CONTROLLED-NOT GATE WITH QUBIT 11 AS CONTROL BIT AND QUBIT 5 AS TARGET BIT

┌─ S608

EXECUTE CONTROLLED-NOT GATE WITH QUBIT 11 AS CONTROL BIT AND QUBIT 6 AS TARGET BIT

A

# FIG.7

A

S701

EXECUTE HADAMARD GATE FOR QUBIT 11

S702

PERFORM Z MEASUREMENT FOR QUBITS 10 AND 11

S703

PRODUCT OF MEASUREMENT RESULTS FOR QUBITS 10 AND 11 IS 1? — NO

YES

S704

EXECUTE Z GATE ON QUBITS 1 AND 3

END

FIG.8

# FIG.9

```
                    ( START )
                        │
                        ▼                    ┌ S901
┌─────────────────────────────────────────────────┐
│ SET QUBITS 1 TO 4 TO LOGICAL STATE |0ₗᴬ>          │
│ AND SET QUBITS 5 TO 8 TO LOGICAL STATE            │
│ |0ₗᴮ>                                             │
└─────────────────────────────────────────────────┘
```

SET QUBITS 1 TO 4 TO LOGICAL STATE $|0_L^A>$ AND SET QUBITS 5 TO 8 TO LOGICAL STATE $|0_L^B>$ — S901

SET QUBITS 9 TO 13 AND 16 TO STATE $|0>$ — S902

EXECUTE HADAMARD GATE FOR QUBITS 13 AND 16 — S903

SET QUBITS 10 AND 11 TO STATE $|00>+|11>$ — S904

EXECUTE CONTROLLED-NOT GATE WITH QUBITS 13 AND 16 AS CONTROL BITS AND QUBITS 1 AND 7 AS TARGET BITS — S905

EXECUTE CONTROLLED-NOT GATE WITH QUBIT 10 AS CONTROL BIT AND QUBIT 3 AS TARGET BIT — S906

EXECUTE CONTROLLED-NOT GATE WITH QUBIT 11 AS CONTROL BIT AND QUBIT 5 AS TARGET BIT — S907

EXECUTE CONTROLLED-NOT GATE WITH QUBITS 13 AND 16 AS CONTROL BITS AND QUBITS 2 AND 8 AS TARGET BITS — S908

EXECUTE CONTROLLED-NOT GATE WITH QUBIT 10 AS CONTROL BIT AND QUBIT 4 AS TARGET BIT — S909

( B )

# FIG.10

B

S1001
EXECUTE CONTROLLED-NOT GATE WITH QUBIT
11 AS CONTROL BIT AND QUBIT 6 AS TARGET BIT

S1002
EXECUTE CONTROLLED-NOT GATE WITH QUBITS
13 AND 16 AS CONTROL BITS AND QUBITS 3 AND
5 AS TARGET BITS

S1003
EXECUTE HADAMARD GATE WITH QUBITS
10 AND 11

S1004
EXECUTE Z MEASUREMENTS ON QUBITS
10 AND 11

S1005
EXECUTE CONTROLLED-NOT GATES WITH QUBITS
13 AND 16 AS CONTROL BITS AND QUBITS 4 AND
6 AS TARGET BITS

S1006
EXECUTE CONTROLLED-NOT GATES WITH QUBITS
1, 3, 5, AND 7 AS CONTROL BITS AND QUBITS
9, 10, 11, AND 12 AS TARGET BITS

S1007
EXECUTE CONTROLLED-NOT GATES WITH QUBITS
2, 4, 6, AND 8 AS CONTROL BITS AND QUBITS
9, 10, 11, AND 12 AS TARGET BITS

S1008
EXECUTE HADAMARD GATES FOR QUBITS
13 AND 16

S1009
EXECUTE Z MEASUREMENT FOR QUBITS 9 TO 13,
AND 16

END

# FIG.11

QUANTUM STATE TRANSFER
(REMOTE ENTANGLEMENT)
TECHNIQUE

ARRANGEMENT    1110

1120

NODE A

NODE B

○ DATA QUBIT

◍ ANCILLA QUBIT FOR ERROR
CORRECTION Z MEASUREMENT

◍ ANCILLA QUBIT FOR ERROR
CORRECTION X MEASUREMENT

◍ ANCILLA QUBIT FOR MERGE PROCESS

# FIG.12

# FIG.13

# FIG.14

START

S1401

SET QUBITS 1 TO 4 TO LOGICAL
STATE $|0_L^A>$, AND SET QUBITS 5 TO 8
TO LOGICAL STATE $|0_L^B>$

S1402

SET QUBITS 9 TO 18 TO STATE $|0>$

S1403

SET QUBITS 14, 15, 17 AND 18 TO
STATE $|00>+|11>$

S1404

EXECUTE CONTROLLED-NOT GATE
WITH QUBIT 14 AS CONTROL BIT AND
QUBIT 3 AS TARGET BIT

S1405

EXECUTE CONTROLLED-NOT GATE
WITH QUBIT 17 AS CONTROL BIT AND
QUBIT 5 AS TARGET BIT

S1406

EXECUTE CONTROLLED-NOT GATE
WITH QUBIT 15 AS CONTROL BIT AND
QUBIT 4 AS TARGET BIT

S1407

EXECUTE CONTROLLED-NOT GATE
WITH QUBIT 18 AS CONTROL BIT AND
QUBIT 6 AS TARGET BIT

C

# FIG.15

C

**EXECUTE HADAMARD GATE FOR QUBITS 14 TO 18**  ⌐ S1501

**EXECUTE Z MEASUREMENTS FOR QUBITS 14 TO 18**  ⌐ S1502

**PRODUCT OF MEASUREMENT RESULTS FOR QUBITS 14 TO 18 IS 1?**  ⌐ S1503

NO → **EXECUTE Z GATE FOR QUBITS 1 AND 3**  ⌐ S1504

YES

**EXECUTE CONTROLLED-NOT GATE WITH QUBIT 3 AS CONTROL BIT AND QUBIT 10 AS TARGET BIT**  ⌐ S1505

**EXECUTE CONTROLLED-NOT GATE WITH QUBIT 4 AS CONTROL BIT AND QUBIT 10 AS TARGET BIT**  ⌐ S1506

**EXECUTE Z MEASUREMENT FOR QUBIT 10**  ⌐ S1507

**EXECUTE HADAMARD GATE FOR QUBITS 13 AND 16**  ⌐ S1508

D

# FIG.16

D

S1601

EXECUTE CONTROLLED-NOT GATE WITH QUBITS
13, 16, 3, AND 7 AS CONTROL BITS AND QUBITS
1, 5, 10, AND 12 AS TARGET BITS

S1602

EXECUTE CONTROLLED-NOT GATE WITH QUBITS
13, 16, 4, AND 8 AS CONTROL BITS AND QUBITS
2, 6, 10, AND 12 AS TARGET BITS

S1603

EXECUTE CONTROLLED-NOT GATE WITH QUBITS
13, 16, 1, AND 5 AS CONTROL BITS AND QUBITS
3, 7, 9, AND 11 AS TARGET BITS

S1604

EXECUTE CONTROLLED-NOT GATE WITH QUBITS
13, 16, 2, AND 6 AS CONTROL BITS AND QUBITS
4, 8, 9, AND 11 AS TARGET BITS

S1605

EXECUTE HADAMARD GATE FOR QUBITS
13 AND 16

S1606

EXECUTE Z MEASUREMENTS FOR QUBITS
9 TO 13 AND 16

END

# FIG.17

# FIG.18

# FIG.19

RESULTS OF DATA QUBIT MEASUREMENT

P=0.0, NOT CONSIDERED   1900

FIDELITY

F=1.000±0.000

# FIG.20

RESULTS OF DATA QUBIT MEASUREMENT

P=0.1, NOT CONSIDERED    2000

| | 0 | 0.05 | 0.1 | 0.15 |
|---|---|---|---|---|
| 11110011 | | | | |
| 00000011 | | | | |
| 00001100 | | | | |
| 11111100 | | | | |
| 11001100 | | | | |
| 11000011 | | | | |
| 00110011 | | | | |
| 00111100 | | | | |
| 00001111 | | | | |
| 11111111 | | | | |
| 00000000 | | | | |
| 11110000 | | | | |

FIDELITY

F=0.962±0.002

# FIG.21

RESULTS OF DATA QUBIT MEASUREMENT

P=0.1, CONSIDERED          2100

```
        ⋮
11010000
11110001
00000100
00100000
00001110
00000001
11110011
11111100
00000011
00001100
11000011
00110011
11001100
00111100
11111111
11110000
00001111
00000000
        0      0.05      0.1      0.15
```

FIDELITY

F=0.778±0.004

# FIG.22

# FIG.23

# FIG.24

# FIG.25

# FIG.26

RESULTS OF DATA QUBIT MEASUREMENT

P=0.0, NOT CONSIDERED    2600

11111111

11110000

11001100

11000011

00111100

00110011

00001111

00000000

0      0.05      0.1      0.15

FIDELITY

F=1.000±0.000

# FIG.27

RESULTS OF DATA QUBIT MEASUREMENT

P=0.1, NOT CONSIDERED    2700

```
00100011
11011100
11101111
00010000
11100000
00011111
11100011
11101100
00011100
00010011
00111100
11001100
11000011
00110011
00001111
00000000
11110000
11111111
```

0       0.05      0.1      0.15

FIDELITY

F=0.925±0.002

# FIG.28

RESULTS OF DATA QUBIT MEASUREMENT

P=0.1, CONSIDERED     2800

⋮

| | |
|---|---|
| 00100011 | |
| 00101100 | |
| 11101111 | |
| 00011111 | |
| 11100000 | |
| 00010000 | |
| 11100011 | |
| 00010011 | |
| 11101100 | |
| 00011100 | |
| 00110011 | |
| 11000011 | |
| 00111100 | |
| 11001100 | |
| 11111111 | |
| 11110000 | |
| 00001111 | |
| 00000000 | |

0     0.05     0.1     0.15

FIDELITY

F=0.670±0.005

# FIG.29

ARRANGEMENT 2910

QUANTUM STATE TRANSFER
(REMOTE ENTANGLEMENT)
TECHNIQUE 2920

NODE A

NODE B

○ DATA QUBIT

◍ ANCILLA QUBIT FOR ERROR
CORRECTION Z MEASUREMENT

◍ ANCILLA QUBIT FOR ERROR
CORRECTION X MEASUREMENT

◍ ANCILLA QUBIT FOR MERGE PROCESS

◍ ANCILLA QUBIT FOR ERROR CORRECTION Z
MEASUREMENT & MERGE PROCESS

# FIG.30

MERGING

3000

# FIG.31

3100

3110                3120

9

1    3          5    7

2    4          6    8

LOGICAL QUBIT A          LOGICAL QUBIT B

# FIG.32

# FIG.33

3310

3320

3300

1    3    5    7

9

2    4    6    8

LOGICAL QUBIT A          LOGICAL QUBIT B

# FIG.34

## INTERNATIONAL SEARCH REPORT

| | International application No. |
|---|---|
| | **PCT/JP2023/008192** |

**A. CLASSIFICATION OF SUBJECT MATTER**

*G06N 10/00*(2022.01)i
FI: G06N10/00

According to International Patent Classification (IPC) or to both national classification and IPC

**B. FIELDS SEARCHED**

Minimum documentation searched (classification system followed by classification symbols)

G06N10/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 113592091 A (TSINGHUA UNIVERSITY) 02 November 2021 (2021-11-02) paragraphs [0002]-[0005], fig. 2 | 1, 7-8 |
| A | | 2-6 |
| A | JP 2012-526430 A (HEWLETT-PACKARD DEVELOPMENT COMPANY, L.P.) 25 October 2012 (2012-10-25) paragraph [0020], fig. 2 | 1-8 |
| A | CN 114492813 A (BEIJING BAIDU NETWORK COMMUNICATION SCIENCE AND TECHNOLOGY LIMITED COMPANY) 13 May 2022 (2022-05-13) paragraphs [0003]-[0007] | 1-8 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

| | International application No. |
|---|---|
| | **PCT/JP2023/008192** |

| Patent document cited in search report | Publication date (day/month/year) | Patent family member(s) | Publication date (day/month/year) |
|---|---|---|---|
| CN 113592091 A | 02 November 2021 | (Family: none) | |
| JP 2012-526430 A | 25 October 2012 | WO 2010/142355 A1 p. 7, line 25 to p. 8, line 6, fig. 2 CN 102439896 A KR 10-2012-0028876 A | |
| CN 114492813 A | 13 May 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014090341 A
- JP 2022057269 A
- US 20200394101 A
- US 20200119748 A